(19) **Europäisches Patentamt** / **European Patent Office** / **Office européen des brevets**

(11) **EP 4 525 072 A1**

(12) **EUROPEAN PATENT APPLICATION**

(43) Date of publication:
19.03.2025 Bulletin 2025/12

(21) Application number: 24200202.0

(22) Date of filing: 13.09.2024

(51) International Patent Classification (IPC):
$H01M\ 4/133^{(2010.01)}$    $H01M\ 4/1393^{(2010.01)}$
$H01M\ 4/36^{(2006.01)}$    $H01M\ 4/587^{(2010.01)}$
$H01M\ 10/0525^{(2010.01)}$    $H01M\ 10/0562^{(2010.01)}$

(52) Cooperative Patent Classification (CPC):
H01M 4/133; H01M 4/044; H01M 4/1393;
H01M 4/366; H01M 4/587; H01M 10/0525;
H01M 10/0562; H01M 2004/021; H01M 2300/0068;
H01M 2300/0071; H01M 2300/0082;
H01M 2300/0091

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 18.09.2023 KR 20230124085

(71) Applicant: Samsung Electronics Co., Ltd
Suwon-si, Gyeonggi-do 16677 (KR)

(72) Inventors:
• ROEV, Victor
16678 Suwon-si (KR)
• KIM, Sewon
16678 Suwon-si (KR)
• KIM, Jusik
16678 Suwon-si (KR)

(74) Representative: Elkington and Fife LLP
Prospect House
8 Pembroke Road
Sevenoaks, Kent TN13 1XR (GB)

(54) **SUB-ASSEMBLY FOR ALL-SOLID-STATE BATTERY, ALL-SOLID-STATE BATTERY, AND METHOD OF PREPARING ALL-SOLID-STATE BATTERY**

(57) An anode sub-assembly includes an anode current collector, a middle layer, and a solid electrolyte layer are arranged in this stated order, wherein in an initial state or fully discharged state thereof, the middle layer includes a first porous carbon material-containing middle layer contacting the solid electrolyte layer and including a porous carbon material having pores partially or fully filled with lithium, a second porous carbon material-containing middle layer on the first middle layer and having lithium-free pores, and a third metal-containing middle layer that is in contact with the anode current collector and is on the second porous carbon material-containing middle layer, wherein the third metal-containing middle layer includes a metal.

FIG. 1

EP 4 525 072 A1

**Description**

FIELD OF THE INVENTION

The present disclosure relates to a sub-assembly for use in an all-solid-state battery, an all-solid-state battery, and a method of preparing the all-solid-state battery.

BACKGROUND OF THE INVENTION

For the development of batteries with higher energy density and safety, all-solid-state batteries using solid electrolytes instead of flammable organic electrolytes have been proposed. All-solid-state batteries use, as an anode, an anode active material layer of lithium or a lithium alloy, or an anode current collector on which an anode active material layer is not formed during manufacture.

There remains a need for an all-solid-state battery having a structure that can enhance contact between an anode current collector and a solid electrolyte layer while strengthening the mechanical structure therebetween, thereby improving charge and discharge characteristics, and a method of preparing the all-solid-state battery.

SUMMARY OF THE INVENTION

Provided is a sub-assembly for use in an all-solid-state battery with a strengthened mechanical structure and improved charge/discharge characteristics.

Provided is an all-solid-state battery including the sub-assembly.

Provided is a method of preparing the all-solid-state battery.

Additional aspects will be set forth in part in the description which follows and, in part, will be apparent from the description, or may be learned by practice of the presented embodiments of the disclosure.

According to an aspect of the disclosure, provided is a sub-assembly for use in an all-solid-state battery, in which an anode current collector, a middle layer, and a solid electrolyte layer, wherein in the initial state or fully discharged state thereof, the middle layer includes a first porous carbon material-containing middle layer contacting the solid electrolyte layer and includes a porous carbon material having pores partially or fully filled with lithium, a second porous carbon material-containing middle layer comprising lithium-free pores and disposed on the first porous carbon material-containing middle layer, and a third metal-containing middle layer that is in contact with the anode current collector and is on the second porous carbon material-containing middle layer, wherein the third metal-containing middle layer comprises a metal.

According to another aspect of the disclosure, an all-solid-state battery includes a cathode including a cathode current collector and a cathode active material layer, and the sub-assembly on the cathode.

According to another aspect of the disclosure, a method of preparing an all-solid-state battery includes: preparing a solid electrolyte molded body, surface treating the solid electrolyte molded body to provide a treated surface, applying a porous carbon material-containing middle layer on one side of the solid electrolyte layer, drying the porous carbon material-containing middle layer to prepare the solid electrolyte layer having the porous carbon material-containing middle layer on one side, disposing the anode current collector on the porous carbon material-containing middle layer; attaching, on a surface of the solid electrolyte layer opposite to the surface on which the porous carbon material-containing middle layer is disposed, a first metal foil with the first metallic lithium disposed to obtain a first laminate comprising the anode current collector/the porous carbon material-containing middle layer/the solid electrolyte layer/the first metallic lithium/the first metal foil, pre-lithiating the first laminate under vacuum to obtain a second laminate comprising the anode current collector/the second porous carbon material-containing middle layer with lithium-free pores/the first porous carbon material-containing middle layer with pores partially or fully filled with lithium/the solid electrolyte layer/the first metallic lithium/the first metal foil by removing, from the second laminate, the first metal foil on which the first metallic lithium is disposed and disposing a second metal foil between the second porous carbon material-containing middle layer and the anode current collector, to form a third metal-containing middle layer thereby preparing the sub-assembly described above; and disposing a cathode on the solid electrolyte layer of the sub-assembly to prepare the all-solid-state battery.

BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 shows a cross-sectional view of an embodiment of a sub-assembly for use in an all-solid-state battery;
FIG. 2 shows a schematic diagram to explain the effect of the sub-assembly for use in an all-solid-state battery;

FIG. 3A shows a schematic process flowchart for an embodiment of a method of preparing an anode portion including a solid electrolyte layer and a middle layer;

FIG. 3B shows a schematic process flowchart for an embodiment of a method of preparing an all-solid-state battery;

FIG. 4 shows the results of scanning electron microscope (SEM) analysis of a sub-assembly of an anode-solid electrolyte layer by disassembling an all-solid-state secondary battery prepared according to Example 1;

FIGS. 5A to 5D show the results of Auger electron spectroscopy (AES) analysis of a sub-assembly of an anode-solid electrolyte layer by disassembling the all-solid-state secondary battery prepared according to Example 1;

FIG. 6 shows an image of an X-ray photoelectron spectroscopy (XPS) analysis sample in which P1 (center portion) to P5 (edge portion) are marked on the surface of a porous carbon material-containing middle layer on a solid electrolyte layer, after a pouch and an anode are removed from a pre-lithiated second laminate of the all-solid secondary battery prepared according to Example 1;

FIGS. 7A to 7E show XPS analysis results for lithium, carbon, oxygen, and chlorine distributed in the porous carbon material-containing middle layer from 1 (P1) (center portion), 2 (P2), 3 (P3), 4 (P4), and 5 (P5) (edge portion) in the sample of FIG. 6.

FIGS. 8A to 8E show the results of charging and discharging experiments for all-solid-state secondary batteries prepared according to Example 1, Example 2, and Comparative Examples 1 to 3 in a constant temperature bath at 25 °C for a total of 26 cycles; and

FIGS. 9A and 9B show the results of charging and discharging experiments for the all-solid-state secondary batteries prepared according to Example 1, Example 2, and Comparative Examples 1 to 3 in a constant temperature bath at 25 °C for a total of 30 cycles.

## DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

The present inventive concept described below can be subjected to various transformations and can have various embodiments. Accordingly, specific embodiments are illustrated in the drawings and described in detail in the detailed description. However, this is not intended to limit the present inventive concept to a specific embodiment, and should be understood to include all transformations, equivalents, or substitutes included in the technical scope of the present inventive concept.

The terms used below are only used to describe specific embodiments and are not intended to limit the creative idea. Singular expressions include plural expressions unless the context clearly dictates otherwise.

In this specification, the expressions "at least one type", "one or more types", or "one or more" in front of the components may supplement the entire list of components, and may not supplement the individual components of the description. The term "combination" used herein includes mixtures, alloys, reaction products, etc., unless specifically stated otherwise. The term "include" used herein refers to further inclusion of other components rather than excluding other components, unless specifically stated otherwise. The terms "first" and "second" do not indicate order, quantity, or importance, but are used to distinguish one element from another element. Unless indicated otherwise herein or clearly contradicted by context, it should be construed to include both the singular and the plural. "Or" refers to "and/or" unless indicated otherwise.

Throughout this specification, "an embodiment," "embodiment," etc. refer to the case in which a particular element described in connection with an embodiment is included in at least one embodiment described herein and may or may not exist in other embodiments. Additionally, it should be understood that the elements described may be combined in any suitable way in various embodiments.

Unless stated otherwise, all percentages, parts, ratios, etc. are based on weight. Additionally, when an amount, concentration, or other value or parameter is given as one of a range, a preferred range, or a list of upper and lower preferred values, it should be understood that all ranges formed from any upper range limit or preferred value and any lower range limit or preferred value, or any pair of preferred values, regardless of whether a range is separately disclosed.

When a range of numerical values is stated herein, unless stated otherwise, the range is intended to include the endpoints and all integers and fractions within the range. The scope of the disclosure is intended to be not limited to the specific values recited when defining the scope.

Unless specified otherwise, the unit "parts by weight" refers to the weight ratio between respective component, and the unit "part by mass" refers to the value obtained by converting the weight ratio of respective components into solid content.

The term "about" used herein includes the stated value and refers to within the range of acceptable deviations with respect to a particular value as determined by a person skilled in the art, taking into account the errors associated with the measurement and the measurement of a particular quantity (i.e., the limitation of measurement system). For example, "about" may refer to within one or more standard deviations, or within $\pm30\%$, 20%, 10%, or 5% of a specified value.

Unless defined otherwise, all terms (including technical terms and scientific terms) used in this specification have the same meaning as commonly understood by a person skilled in the art to which this disclosure pertains. It would also be understood that terms, such as terms that are commonly used and defined in dictionaries, should be construed as having meanings consistent with their meanings in the context of the related art and the present disclosure, and should not be construed as idealized. Also, it should not be interpreted in an overly formal sense.

Example embodiments are described herein with reference to cross-sectional views, which are schematic diagrams of idealized embodiments. Accordingly, the shape of embodiments may vary, for example as a result of preparing techniques and/or tolerances. Accordingly, embodiments described herein should not be construed as being limited to the specific shape of the region described herein, but should include deviations in shape that occur, for example, during manufacturing. For example, areas illustrated or described as being flat may generally have rough and/or non-linear features. Additionally, the illustrated acute angles may be round. Accordingly, the regions illustrated in the drawings are schematic in nature and the shapes thereof are not intended to illustrate the exact shape of the regions or to limit the scope of the claims.

All-solid-state batteries have been prepared using cold isostatic pressing (CIP) and/or warm isostatic pressing (WIP). However, in an all-solid-state battery prepared by these methods, and while not wanting to be bound by theory, it is understood that a gap region or a void can remain between an anode current collector and a solid electrolyte layer after assembly due to high pressure and low or high temperature. As a result, the interfacial resistance between the anode and the solid electrolyte layer of the all-solid-state battery is increased and the charge and discharge characteristics deteriorate.

Also, during charge and discharge, and while not wanting to be bound by theory, it is understood that when an all-solid-state battery with a "Li-free" (or anode-free) structure is repeatedly subjected to a process of lithium dissolution and lithium deposition, a void is formed between an anode and a solid electrolyte layer and the interfacial resistance therebetween may increase.

In addition, when the all-solid-state battery of this structure is prepared through a pressurization step and a heat treatment step using cold isostatic pressing (CIP) and/or warm isostatic pressing (WIP), interface regions between the anode and the solid electrolyte layer may not retain good contact, and thus a gap region or a void may exist between the anode and the solid electrolyte layer. Therefore, the charge and discharge characteristics of the all-solid-state battery deteriorate.

Recently, in order to solve this issue, a method of applying a silver-carbon composite anode has been used to improve discharge capacity at low temperature and provide high energy density and long life characteristics. However, this method is only applicable when the solid electrolyte layer is a sulfide-based solid electrolyte, and a lithium copper foil can be attached using only the cold isostatic pressing (CIP) method described above, which causes the problems described above.

The inventor of the present disclosure proposes an all-solid-state battery with a new structure and a preparing method thereof that can be applicable to a broader range of solid electrolyte layers, such as oxide-based solid electrolyte and polymer solid electrolyte, in addition to sulfide-based solid electrolyte and to solve these problems.

Hereinafter, a sub-assembly for use in the all-solid-state battery, an all-solid-state battery, and a method of preparing the all-solid-state battery according to example embodiments will be described in more detail.

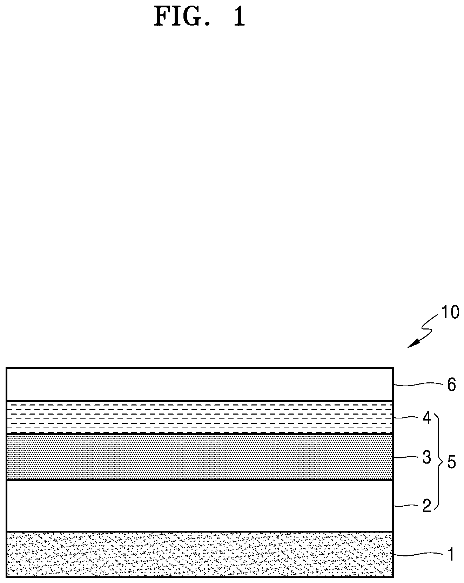

FIG. 1 shows a cross-sectional view of an embodiment of a sub-assembly 10 for use in an all-solid-state battery.

The sub-assembly 10 for use in the all-solid-state battery of FIG. 1 has a "Li-free" (or anode-free) structure in the initial state or fully discharged state, in which a solid electrolyte layer 1, a middle layer 5, and an anode current collector 6 are arranged in the stated order.

The middle layer 5 includes a first porous carbon material-containing middle layer 2 comprising a porous carbon material having pores partially or fully filled with lithium, a second porous carbon material-containing middle layer 3 comprising a porous carbon material and having lithium-free pores, and a third metal-containing middle layer 4 comprising a metal-containing layer. The first porous carbon material-containing middle layer 2 is a layer that has pores partially or completely filled with lithium and is in contact with the solid electrolyte layer 1. The second porous carbon material-containing middle layer 3 has pores that do not contain lithium and is located on the first porous carbon material-containing middle layer 2. The third metal-containing middle layer 4 is a layer that comprises a metal and is in contact with the anode current collector 6 on the second porous carbon material-containing middle layer 3.

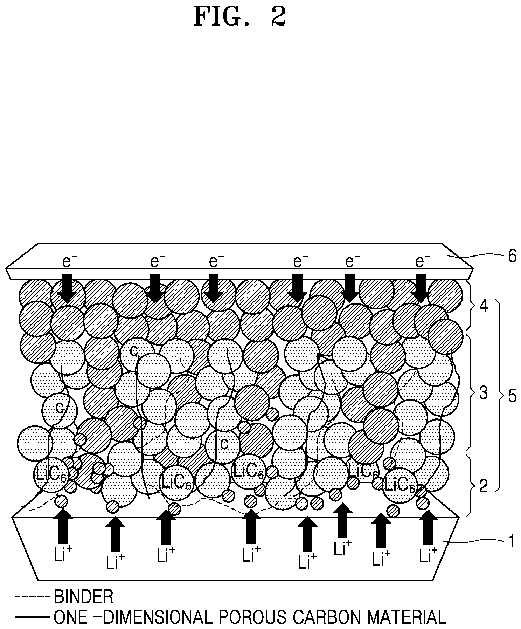

While not wanting to be bound by theory, FIG. 2 shows a schematic diagram to explain the effect that a sub-assembly for use in an all-solid-state battery according to an embodiment is understood to be effective.

The sub-assembly 10 for use in the all-solid-state battery of FIG. 2 has a structure of which constituting layers are arranged in the same order as in the cross-sectional view of FIG. 1.

Regarding the middle layers 5, the first porous carbon material-containing middle layer 2 may have fine-sized, nano-sized, or micro-sized pores. Here, fine-sized pores refer to 2 nm or less pores. Among these, macro-sized pores and meso-sized pores play an important role in lithium transport. Here, macro-sized pores refer to 50 nm or greater. Meso-sized pores refer to 2 nm to 50 nm pores. For example, the first porous carbon material-containing middle layer 2 may have pores with a size of about 10 nanometers (nm) to about 50 nm, about 50 nm to about 100 nm, about 100 nm to about 200 nm, about 200 nm to about 500 nm, or about 500 nm to about 1000 nm. The first porous carbon material-containing middle layer 2 may have a porosity of 30% or more. For example, the first porous carbon material-containing middle layer 2 may have a porosity of 30% to 60%. Also, 50% or more, 55% or more, 60% or more, 65% or more, 70% or more, 75% or more, 80% or more, 85% or more, 90% or more, 95% or more, or at least 99% of pores of the first porous carbon material-containing middle layer 2 may be filled with lithium. For example, 100% of the pores of the first porous carbon material-containing middle layer 2 may be filled with lithium.

The first middle layer 2 and the second middle layer 3 may include a one-dimensional porous carbon material and a three-dimensional porous carbon material, respectively.

The one-dimensional porous carbon material may include carbon nanotubes, carbon nanofibers, carbon nanowires, carbon nanorods, carbon nanoribbons, carbon nanobelts, or a combination thereof. For example, the one-dimensional porous carbon material may include carbon nanotubes, carbon nanofibers, carbon nanowires, carbon nanorods, or a combination thereof. The three-dimensional porous carbon material may include carbon black particles, graphite particles, carbon nanoflowers, carbon nanoprisms, carbon nanodiamonds, or a combination thereof. For example, the three-dimensional porous carbon material may include carbon black particles, graphite particles, or a combination thereof.

The one-dimensional porous carbon material and the three-dimensional porous carbon material may form a microporous carbon material channel inside the middle layer 5. The one-dimensional porous carbon material may provide an electrically conductive path from the anode to the solid electrolyte layer 1. The one-dimensional porous carbon material may provide a short or electrically conductive path for electrons from the anode to the solid electrolyte layer 1. The three-dimensional porous carbon material may provide a lithium atom transport path from the solid electrolyte layer 1 to the anode. The first porous carbon material-containing middle layer 2 has pores that are partially or fully filled with lithium and may quickly supply lithium from the solid electrolyte layer 1 to the anode through diffusion, and may likewise remove lithium. As a result, the sub-assembly 10 for use in an all-solid-state battery may have improved discharge capacity. In addition, the sub-assembly 10 for use in an all-solid-state battery may improve cell performance by strengthening the mechanical structure between the solid electrolyte layer 1 and the anode current collector 6 even though the binder is used in a small amount.

The content of the one-dimensional porous carbon material may be, based on the total weight of the first porous carbon material-containing middle layer 2 and the second porous carbon material-containing middle layer 3, about 0.01 weight percent (wt%) to about 1 wt%, about 0.02 wt% to about 1 wt%, about 0.04 wt% to about 1 wt%, about 0.08 wt% to about 1 wt%, or about 0.1 wt% to about 1 wt%.

The first porous carbon material-containing middle layer 2 and the second porous carbon material-containing middle layer 3 may each further include a two-dimensional porous carbon material. The two-dimensional porous carbon material may further improve cell performance by strengthening the mechanical structure between the solid electrolyte layer 1 and the anode current collector 6 even though the binder is used in a small amount.

The two-dimensional porous carbon material may include graphene, carbon nanosheets, carbon plates, carbon platelets, MXenes, or a combination thereof. MXenes may be prepared by selective etching of element A in the MAX phase, which is a layered solid that is metallically conductive and connected by strong metallic bonds, ionic bonds, and covalent bonds. Examples of MXenes include $Ti_2AlC$, $Ti_3AlC_2$, or $Ta_4AlC_3$.

The first porous carbon material-containing middle layer 2 and the second porous carbon material-containing middle layer 3 may each further include a metal material comprising metal nanoparticles, metal nanowires, metal nanotubes, metal nanofibers, metal nanosheets, metal nanorods, an alloy thereof, or a combination thereof. Examples of metal materials that may be included in the first porous carbon material-containing middle layer 2 and the second porous carbon material-containing middle layer 3 may include gold, platinum, palladium, silver, aluminum, bismuth, tin, zinc, or a combination thereof. Due to the further inclusion of the metal material in the first porous carbon material-containing middle layer 2 and the second porous carbon material-containing middle layer 3, the charge and discharge characteristics of the all-solid-state battery may be further improved.

For example, the metal material may be in a form of particles. The median particle diameter (D50) of the metal material may be about 4 micrometers ($\mu$m) or less, about 3 $\mu$m or less, about 2 $\mu$m or less, about 1 $\mu$m or less, or 0.5 $\mu$m or less. The lower limit of D50 is not particularly limited, and may be about 10 nm or more. The D50 refers to the particle diameter value corresponding to 50% from the smallest particle when the total number of particles is 100% in the distribution curve accumulated in order from the smallest particle diameter to the largest particle diameter. D50 may be measured by a method well known to a person skilled in the art, for example, by using a particle size analyzer, or by measuring from a transmission electron microscope (TEM) image or scanning electron microscope (SEM) image. Another method for obtaining D50 is as follows: measurement may be performed using a measuring device using dynamic light-scattering, data analysis is performed to count the number of particles for each particle diameter range, and then D50 is obtained by calculation therefrom. The mixing weight ratio of the metal material and the carbon material in each of the first porous carbon material-containing middle layer 2 and the second porous carbon material-containing middle layer 3 may be, for example, 10:1 to 1:10, 5:1 to 1:5, 4:1 to 1:4, 3:1 to 1:3, or 2:1 to 1:2, but is not necessarily limited to these ranges, and may be selected depending on the characteristics of the all-solid-state battery desired.

The first porous carbon material-containing middle layer 2 and the second porous carbon material-containing middle layer 3 may each further include a binder. The binder may be an aqueous binder, an organic binder, or a combination thereof. Examples of binders include: one or more types of polymers selected from polyvinyl alcohol, polyacrylic acid, polymethacrylic acid, polyvinyl alcohol grafted polyacrylic acid, polyvinyl alcohol grafted polymethacrylic acid, carboxymethyl cellulose, butadiene rubber, nitrile-butadiene rubber, hydrogenated nitrile-butadiene rubber, styrene-butadiene rubber, styrene-butadiene-styrene rubber, acrylate-butadiene rubber, acrylonitrile-butadiene-styrene rubber, polyvinylidene fluoride, a copolymer of vinylidene fluoride and hexafluoropropylene, polyisobutylene, polyethylene, polypropylene, and polyimide; or copolymers thereof.

For example, the first porous carbon material-containing middle layer 2 and the second porous carbon material-containing middle layer 3 may each include a water-soluble binder.

The use of the water-soluble binder may improve the binding force with the solid electrolyte layer 1, while the reactivity of the water-soluble binder is maintained at low levels, in the case where the solid electrolyte layer 1 is an oxide solid electrolyte. In addition, the use of the water-soluble binder may contribute to a decrease in the binder content due to the excellent binding force with the solid electrolyte layer 1, and is environmentally friendly because water is used as a solvent.

Examples of water-soluble binders include: one or more types of polymers selected from polyvinyl alcohol, polyacrylic acid, polymethacrylic acid, polyvinyl alcohol-grafted polyacrylic acid, and polyvinyl alcohol-grafted polymethacrylic acid; or copolymers thereof. Among these, one or more types of polymers selected from polyvinyl alcohol-grafted polyacrylic acid and polyvinyl alcohol-grafted polymethacrylic acid; or copolymers thereof, may be used as the aqueous binder. These grafted polymer or copolymer binders may not only have improved binding force but also have superior elasticity compared to linear polymers or copolymers. Therefore, all-solid-state batteries including, as a binder, a grafted polymer or copolymer in the first porous carbon material-containing middle layer 2 and the second porous carbon material-containing middle layer 3 may have improved charge and discharge characteristics such as coulombic efficiency and cycle characteristics.

The content of the binder may be about 0.1 wt% to about 7 wt%, based on the total weight of the first porous carbon material-containing middle layer 2 and the second porous carbon material-containing middle layer 3. Even when such a small amount of binder is used, the binding force between the solid electrolyte layer 1 and the anode current collector 6 is improved and a strong mechanical structure may be obtained, thereby improving cell performance.

If desired, the first porous carbon material-containing middle layer 2 and the second porous carbon material-containing middle layer 3 may further include an electrically conductive polymer.

Examples of the electrically conductive polymer are poly(fluorene), polyphenylene, polypyrene, polyazulene, polynaphthalene, polyacetylene (PAC), poly(p-phenylenevinylene) (PPV), polypyrrole (PPY), polycarbazole, polyindole, polyazepine, polyaniline (PANI), polythiophene (PT), poly(3,4-ethylenedioxythiophene) (PEDOT), or poly(p-phenylene sulfide) (PPS). By further including an electrically conductive polymer in the first porous carbon material-containing middle layer 2 and the second porous carbon material-containing middle layer 3, charge and discharge characteristics of the all-solid-state battery, such as coulombic efficiency and cycle characteristics, may be further improved.

The thickness ratio of a thickness of the second porous carbon material-containing middle layer 2 to a thickness of the first porous carbon material-containing middle layer 3 may be 1: 0.5 to 1:5, 1:1 to 1:5, 1:1.5 to 1:5 or 1:2 to 1:5. The middle layer 5 having this thickness range may increase the electron contact area with the solid electrolyte layer 1 to improve cell performance.

For example, the thickness of the first porous carbon material-containing middle layer 2 may be about 1 $\mu$m to about 5 $\mu$m. For example, the thickness of the second porous carbon material-containing middle layer 3 may be about 5 $\mu$m to about 10 $\mu$m. The first porous carbon material-containing middle layer 2 may be a pre-lithiation layer.

An all-solid-state battery including the first porous carbon material-containing middle layer 2 having such a thin film thickness may have strong mechanical structural characteristics and may have improved cell performance such as charge/discharge efficiency, discharge capacity, and capacity retention. In comparison, in the cases of all-solid-state batteries prepared using cold isostatic pressing (CIP) and/or warm isostatic pressing (WIP), since the manufacturing process includes a pressing and a heat treatment steps, the thickness of the first porous carbon material-containing middle layer 2 may be increased to prevent the formation of voids between an anode and the solid electrolyte layer 1. When the first porous carbon material-containing middle layer 2 is formed to have a thin film thickness using cold isostatic pressing (CIP) and/or warm isostatic pressing (WIP), the charging and discharging characteristics of an all-solid battery are greatly reduced.

The second porous carbon material-containing middle layer 3 may change in thickness during charging and discharging, and lithium may be trapped in at least some of the pores thereof.

The third metal-containing middle layer 4 may include lithium, indium, gallium, an alloy thereof, or a combination thereof.

After charging, the all-solid-state battery may include one or more of a metal, carbon material, an alloy of thereof and lithium, or a composite thereof, in the first porous carbon material-containing middle layer 2 and the second porous carbon material-containing middle layer 3. Examples of alloys of these and lithium or composites thereof are: alloys of lithium and one or more of gold, platinum, palladium, silver, aluminum, bismuth, tin, or zinc; or LiCe.

The anode current collector 6 may include a material that does not react with lithium, that is, does not form any alloy and any compound. Examples of the anode current collectors are copper (Cu), aluminum (Al), nickel (Ni), titanium (Ti), cobalt (Co), or stainless steel. The anode current collector 6 may include one or an alloy or coating material of two or more of the metals described above. The anode current collector 6 may be plate-shaped or foil-shaped.

The surface of the solid electrolyte layer 1 in contact with the first porous carbon material-containing middle layer 2 may be uneven. An uneven surface of the solid electrolyte layer 1 may be obtained by surface treatment. Examples of surface treatments are chemical treatment, electropolishing, wet polishing, argon plasma etching, oxygen plasma cleaning, annealing, or exposure to high vacuum. The first porous carbon material-containing middle layer 2 may penetrate the uneven surface of the solid electrolyte layer 1 and provide increased contact area with the solid electrolyte layer 1 and also form a stronger interlayer bond.

The solid electrolyte layer 1 may include an oxide solid electrolyte, a sulfide solid electrolyte, a polymer solid electrolyte, or a combination thereof.

An example of an oxide-based solid electrolyte may include one or more of $Li_{1+x+y}Al_xTi_{2-x}Si_yP_{3-y}O_{12}$ ($0<x<2$, $0\leq y<3$), $BaTiO_3$, $Pb(Zr,Ti)O_3$ (PZT), $Pb_{1-x}La_xZr_{1-y}Ti_yO_3$ (PLZT)($0\leq x<1$, $0\leq y<1$), $Pb(Mg_{3}Nb_{2/3})O_3$-$PbTiO_3$(PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0<x<2$, $0<y<3$), $LixAlyTiz(PO_4)_3$($0<x<2$, $0<y<1$, $0<z<3$), $Li_{1+x+y}(Al, Ga)_x(Ti, Ge)_{2-x}Si_yP_{3-y}O_{12}$($0\leq x\leq 1$ $0\leq y\leq 1$), $Li_xLa_yTiO_3$ ($0<x<2$, $0<y<3$), $Li_2O$, $LiOH$, $Li_2CO_3$, $LiAlO_2$, $Li_2O$-$Al_2O_3$-$SiO_2$-$P_2O_5$-$TiO_2$-$GeO_2$, or $Li_{3+x}La_3M_2O_{12}$(M= Te, Nb, or Zr, where x is an integer from 1 to 10).

Oxide-based solid electrolytes may be prepared by a sintering methods, or by a casting methods.

For example, the oxide-based solid electrolyte may be a garnet-based solid electrolyte.

For example, the garnet-based solid electrolyte may include an oxide represented by Formula 1

Formula 1        $(Li_xM1_y)(M)2)_{3-\delta}(M3)_{2-\omega}O_{12-z}X_z$

in which x, y, z, $\delta$, $\omega$, and z in Formula 1 satisfy the conditions of $6\leq x\leq 8$, $0\leq y<2$, $-0.2\leq\delta\leq0.2$, $-0.2\leq\omega\leq0.2$, and $0\leq z\leq 2$,
M1 may be a monovalent cation, a divalent cation, a trivalent cation, or a combination thereof,
M2 may be a monovalent cation, a divalent cation, a trivalent cation, or a combination thereof,
M3 may be a monovalent cation, divalent cation, a trivalent cation, a tetravalent cation, a pentavalent cation, a hexavalent cation, or a combination thereof, and
X may be a monovalent anion, a divalent anion, a trivalent anion or a combination thereof.

Examples of monovalent cations in Formula 1 are Na, K, Rb, Cs, H, and Fr, and examples of divalent cations in Formula 1 are Mg, Ca, Ba, and Sr. Examples of trivalent cations in Formula 1 are In, Sc, Cr, Au, B, Al, and Ga, and examples of tetravalent cations in Formula 1 are Sn, Ti, Mn, Ir, Ru, Pd, Mo, Hf, Ge, V, and Si. Examples of pentavalent cations in Formula 1 are Nb, Ta, Sb, V, and P.

M1 may be, for example, hydrogen (H), iron (Fe), gallium (Ga), aluminum (Al), boron (B), beryllium (Be), or a combination thereof. M2 may be lanthanum (La), barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, and M3 may be zirconium (Zr), hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

Regarding Formula 1, the monovalent anion used as X may be a halogen atom, a pseudohalogen, or a combination thereof, the divalent anion may be $S^{2-}$ or $Se^{2-}$, and the trivalent anion may be, for example, $N^{3-}$.

In Formula 1, x may be $6.6\leq x\leq 8$, $6.7\leq x\leq 7.5$, or $6.8\leq x\leq 7.1$.

For example, the garnet-based solid electrolyte may include an oxide represented by Formula 2

Formula 2        $(Li_xM1_y)(La_{a1} M2_{a2})_{3-\delta}(Zr_{b1}M3_{b2})_{2-\omega}O_{12-z}X_z$

Regarding Formula 2,

M1 may be hydrogen (H), iron (Fe), gallium (Ga), aluminum (Al), boron (B), beryllium (Be), or a combination thereof, M2 may be barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof, and

M3 may be hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof,

$$6 \leq x \leq 8, \ 0 \leq y < 2, \ -0.2 \leq \delta \leq 0.2, \ -0.2 \leq \omega \leq 0.2, \ 0 \leq z \leq 2,$$

$$a1 + a2 = 1, \ 0 < a1 \leq 1, \ 0 \leq a2 < 1,$$

$$b1 + b2 = 1, \ 0 < b1 \leq 1, \ 0 \leq b2 < 1,$$

and

X may be a monovalent anion, a divalent anion, a trivalent anion, or a combination thereof.

Regarding Formula 2, the monovalent anion used as X may be a halogen atom, a pseudohalogen, or a combination thereof, the divalent anion may be $S^{2-}$ or $Se^{2-}$, and the trivalent anion may be, for example, $N^{3-}$.

Regarding Formula 2, x may be $6.6 \leq x \leq 8$, $6.7 \leq x \leq 7.5$, or $6.8 \leq x \leq 7.1$.

The term "pseudohalogen" used herein is a molecule comprised of two or more electronegative atoms that is similar to halogens in the free state, and may generate anions that are similar to halide ions. Examples of pseudohalogens are cyanide, cyanate, thiocyanate, azide, or a combination thereof.

Halogen atoms may be, for example, iodine (I), chlorine (Cl), bromine (Br), fluorine (F), or combinations thereof, and pseudohalogens may be, for example, cyanide, cyanate, thiocyanate, azide, or a combination thereof.

The trivalent anion may be, for example, $N^{3-}$.

According to another embodiment, a garnet-based solid electrolyte may be an oxide represented by Formula 3

Formula 3        $Li_{3+x}La_3Zr_{2-a}M_aO_{12}$

wherein M in Formula 3 may be Al, Ga, In, Si, Ge, Sn, Sb, Bi, Sc, Y, Ti, Hf, V, Nb, Ta, W, or a combination thereof, and x may be a number from 1 to 10, and $0 \leq a < 2$.

Examples of garnet-based solid electrolytes are $Li_7La_3Zr_2O_{12}$, and $Li_{6.5}La_3Zr_{1.5}Ta_{0.5}O_{12}$.

The garnet-based solid electrolyte may have an ionic conductivity of 1 mS·cm$^{-1}$ or more and may be prepared in the form of pellets, tapes, and films. The garnet-based solid electrolyte may be prepared to have various thicknesses over a wide temperature range.

The sulfide-based solid electrolyte is not particularly limited as long as it includes sulfur (S) or sulfur-based elements (Se, Te) and has suitable ionic conductivity. For example, the sulfide-based solid electrolyte may include one or more of $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are positive numbers, and Z is one of Ge, Zn, or Ga), $Li_2S$-$GeS_2$, $Li_2S$-$SiS_2$-$Li_3PO_4$, and $Li_2S$-$SiS_2$-$Li_pMO_q$ (wherein p and q are positive numbers, and M may be one of P, Si, Ge, B, Al, Ga, and In). When a sulfide-based solid electrolyte material includes $Li_2S$-$P_2S_5$, the mixing molar ratio of $Li_2S$ and $P_2S_5$ may be selected in the range of 50:50 to 90:10, may be selected in the range of 60:40 to 90:10, or may be selected in the range of 75:25 to 90:10. The sulfide-based solid electrolyte may be prepared by treating raw starting materials (for example, $Li_2S$, $P_2S_5$, etc.) by a melt quenching method, a mechanical milling method, etc. Additionally, calcinations may be performed after the treatment.

The sulfide-based solid electrolyte may include a compound represented by Formula 4.

Formula 4        $Li_aM1_xPS_yM2_zM3_w$

Regarding Formula 4, M1 may be one or more metal elements other than Li selected from Group 1 to Group 15 of the Periodic Table, and M2 may be one or more elements selected from Group 17 of the Periodic Table, and M3 may be $SO_n$, and may satisfy the conditions of $4 \leq a \leq 8$, $0 \leq x \leq 1$, $3 \leq y \leq 7$, $0 \leq z \leq 5$, $0 \leq w < 2$, and $1.5 \leq n \leq 5$.

Regarding Formula 4, z may be $0 \leq z \leq 5$, $0 < z \leq 4$, $0 < z \leq 3$, $0 < z \leq 2$, $0.2 \leq z \leq 1.8$, $0.5 \leq z \leq 1.8$, $1.0 \leq z \leq 1.8$, or $1.0 \leq z \leq 1.5$.

Regarding Formula 4, $5 \leq a \leq 8$, $0 \leq x \leq 0.7$, $4 \leq y \leq 7$, $0 < z \leq 2$, and $0 \leq w \leq 0.5$, for example, $5 \leq a \leq 7$, $0 \leq x \leq 0.5$, $4 \leq y \leq 6$, $0 < z \leq 2$, and $0 \leq w \leq 0.2$, for example, $5.5 \leq a \leq 7$, $0 \leq x \leq 0.3$, $4.5 \leq y \leq 6$, $0.2 \leq z \leq 1.8$, and $0 \leq w \leq 0.1$, for example, $5.5 \leq a \leq 6$, $0 \leq x \leq 0.05$, $4.5 \leq y \leq 5$,

$1.0 \leq z \leq 1.5$, and $0 \leq w \leq 0.1$.

Regarding the compound represented by Formula 4, for example, M1 may include Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof. M1 may be, for example, a monovalent cation or a divalent cation.

Regarding the compound represented by Formula 4, for example, M2 may include F, Cl, Br, I, or a combination thereof. M2 may be, for example, a monovalent anion.

Regarding the compound represented by Formula 4, for example, $SO_n$ of M3 may be $SaOs$, $S_3O_6$, $S_2O_3$, $S_2O_4$, $S_2O_5$, $S_2O_6$, $S_2O_7$, $S_2O_3$, $SO_4$, $SOs$, or a combination thereof. $SO_n$ may be, for example, a divalent anion. $SO_n^{2-}$ may be, for example, $S_4O_6^{2-}$, $S_3O_6^{2-}$, $S_2O_3^{2-}$, $S_2O_4^{2-}$, $S_2O_5^{2-}$, $S_2O_6^{2-}$, $S_2O_7^{2-}$, $S_2O_8^{2-}$, $SO_4^{2-}$, $SO_5^{2-}$, or a combination thereof.

For example, the compound represented by Formula 4 may be a compound selected from compounds represented by Formulae 4a to 4b below.

$$\text{Formula 4a} \qquad Li_aPS_yM2_zM3_w$$

Regarding Formula 4a, M2 is one or more elements from Group 17 of the Periodic Table, M3 is $SO_n$, and $4 \leq a \leq 8$, $3 \leq y \leq 7$, $0 < z \leq 5$, $0 < w < 2$, and $1.5 \leq n \leq 5$.

$$\text{Formula 4b} \qquad Li_aM1_xPS_yM2_zM3_w$$

Regarding Formula 4b, M1 is one or more metal elements other than Li from Group 1 to Group 15 of the Periodic Table, and M2 is one or more elements from Group 17 of the Periodic Table,

M3 is $SO_n$, $4 \leq a \leq 8$, $0 < x < 1$, $3 \leq y \leq 7$, $0 \leq z \leq 5$, $0 < w < 2$, and $1.5 \leq n \leq 5$.

Regarding Formulae 4a and 4b, $0 \leq z \leq 5$, $0 < z \leq 4$, $0 < z \leq 3$, $0 < z \leq 2$, $0.2 \leq z \leq 1.8$, $0.5 \leq z \leq 1.8$, $1.0 \leq z \leq 1.8$, or $1.0 \leq z \leq 1.5$. Regarding Formulae 4a and 4b, for example, $5 \leq a \leq 8$, $4 \leq y \leq 7$, $0 < z \leq 2$, and $0 \leq w \leq 0.5$; $5.5 \leq a \leq 7$, $4.5 \leq y \leq 6$, $0.2 \leq z \leq 1.8$, and $0 \leq w \leq 0.1$; $0.5 \leq z \leq 1.8$; or $1.0 \leq z \leq 1.8$.

For example, the compound represented by Formula 4 may be a compound represented by Formula 5 below.

$$\text{Formula 5} \qquad Li_{7-m \times v-z}M4_vPS_{6-z}M5_{z1}M6_{z2}$$

wherein M4 is Na, K, Mg, Ag, Cu, Hf, In, Ti, Pb, Sb, Fe, Zr, Zn, Cr, B, Sn, Ge, Si, Zr, Ta, Nb, V, Ga, Al, As, or a combination thereof, m is the oxidation number of M4, M5 and M6 are each independently F, Cl, Br, or I, and $0 < v \leq 0.7$, $0 < z1 < 2$, $0 \leq z2 < 1$, $0 < z < 2$, $z = z1 + z2$, and $1 \leq m \leq 2$.

For example, $0 < v \leq 0.7$, $0 < z1 < 2$, $0 \leq z2 \leq 0.5$, $0 < z < 2$, and $z = z1 + z2$. For example, $0 < v \leq 0.5$, $0 < z1 < 2$, $0 \leq z2 \leq 0.5$, $0 < z < 2$, and $z = z1 + z2$. For example, $0 < v \leq 0.3$, $0 < z1 \leq 1.5$, $0 \leq z2 \leq 0.5$, $0.2 \leq z \leq 1.8$, and $z = z1 + z2$. For example, $0 < v \leq 0.1$, $0 < z1 \leq 1.5$, $0 \leq z2 \leq 0.5$, $0.5 \leq z \leq 1.8$, and $z = z1 + z2$. For example, $0 < v \leq 0.05$, $0 < z1 \leq 1.5$, $0 \leq z2 \leq 0.2$, $1.0 \leq z \leq 1.8$, and $z = z1 + z2$. M4 may be, for example, one type of metal element or two types of metal elements.

For example, the compound represented by Formula 5 may include one type of halogen element or two types of halogen elements.

For example, the compound represented by Formula 5 may be a solid ion conductor compound represented by Formulae 5a to 5f.

$$\text{Formula 5a} \qquad Li_{7-z}PS_{6-z}M5_{z1}M6_{z2}$$

$$\text{Formula 5b} \qquad Li_{7-v-z}Na_vPS_{6-z}M5_{z1}M6_{z2}$$

$$\text{Formula 5c} \qquad Li_{7-v-z}K_vPS_{6-z}M5_{z1}M6_{z2} \qquad \text{Formula 5d} \qquad Li_{7-v-z}Cu_vPS_{6-z}M5_{z1}M6_{z2}$$

$$\text{Formula 5e} \qquad Li_{7-v-z}Mg_vPS_{6-z}M5_{z1}M6_{z2}$$

$$\text{Formula 5f} \qquad Li_{7-v-z}Ag_vPS_{6-z}M5_{z1}M6_{z2}$$

In these Formulae, M5 and M6 may each independently be F, Cl, Br, or I, $0 < v < 0.7$, $0 < z1 < 2$, $0 \leq z2 < 1$, $0 < z < 2$, and $z = z1 + z2$.

Regarding Formulae 5a to 5f, the following conditions may each independently be satisfied: for example, $0 < v \leq 0.7$, $0 < z1 < 2$, $0 \leq z2 \leq 0.5$, $0 < z < 2$, and $z = z1 + z2$; $0 < v \leq 0.5$, $0 < z1 < 2$, $0 \leq z2 \leq 0.5$, $0 < z < 2$, and $z = z1 + z2$; $0 < v \leq 0.3$, $0 < z1 \leq 1.5$, $0 \leq z2 \leq 0.5$, $0.2 \leq z \leq 1.8$, and $z = z1 + z2$; $0 < v \leq 0.05$, $0 < z1 \leq 1.5$, $0 \leq z2 \leq 0.2$, $1.0 \leq z \leq 1.8$, and $z = z1 + z2$, for example, $0 < v \leq 0.05$, $0 < z1 \leq 1.5$, $0 \leq z2 \leq 0.2$, $1.0 \leq z \leq 1.5$, and $z = z1 + z2$. v in Formula 5a is 0.

The compound represented by Formula 4 may be, for example, a compounds represented by one of the following formulae:

$Li_{7-z}PS_{6-z}F_{z1}$, $Li_{7-z}PS_{6-z}Cl_{z1}$, $Li_{7-z}PS_{6-z}Br_{z1}$, $Li_{7-z}PS_{6-z}I_{z1}$, $Li_{7-z}PS_{6-z}F_{z1}Cl_{z2}$, $Li_{7-z}PS_{6-z}F_{z1}Br_{z2}$, $Li_{7-z}PS_{6-z}Fz1I_{z2}$, $Li_{7-z}PS_{6-z}Cl_{z1}Brz2$, $Li_{7-z}PS_{6-z}Cl_{z1}I_{z2}$, $Li_{7-z}PS_{6-z}Cl_{z1}Fz2$, $Li_{7-z}PS_{6-z}Br_{z1}I_{z2}$, $Li_{7-z}PS_{6-z}Br_{z1}Fz2$, $Li_{7-z}PS_{6-z}Br_{z1}Clz2$, $Li_{7-z}PS_{6-z}I_{z1}Fz2$, $Li_{7-z}PS_{6-z}I_{z1}Clz2$, $Li_{7-z}PS_{6-z}I_{z1}Br_{z2}$, $Li_{7-v-z}Na_vPS_{6-z}F_{z1}$, $Li_{7-v-z}Na_vPS_{6-z}Cl_{z1}$, $Li_{7-v-z}Na_vPS_{6-z}Br_{z1}$, $Li_{7-v-z}Na_vPS_{6-z}I_{z1}$, $Li_{7-v-z}Na_vPS_{6-z}F_{z1}Clz2$, $Li_{7-v-z}Na_vPS_{6-z}F_{z1}Br_{z2}$, $Li_{7-v-z}Na_vPS_{6-z}F_{z1}I_{z2}$, $Li_{7-v-z}Na_vPS_{6-z}Cl_{z1}Br_{z2}$, $Li_{7-v-z}Na_vPS_{6-z}Cl_{z1}I_{z2}$, $Li_{7-v-z}Na_vPS_{6-z}Cl_{z1}Fz2$, $Li_{7-v-z}Na_vPS_{6-z}Br_{z1}I_{z2}$, $Li_{7-v-z}Na_vPS_{6-z}Br_{z1}Fz2$, $Li_{7-v-z}Na_vPS_{6-z}Br_{z1}Clz2$, $Li_{7-v-z}Na_vPS_{6-z}I_{z1}Fz2$, $Li_{7-v-z}Na_vPS_{6-z}I_{z1}Clz2$, $Li_{7-v-z}Na_vPS_{6-z}I_{z1}Brz2$, $Li_{7-v-z}K_vPS_{6-z}F_{z1}$, $Li_{7-v-z}K_vPS_{6-z}Cl_{z1}$, $Li_{7-v-z}K_vPS_{6-z}Br_{z1}$, $Li_{7-v-z}K_vPS_{6-z}I_{z1}$, $Li_{7-v-z}K_vPS_{6-z}F_{z1}Clz2$, $Li_{7-v-z}K_vPS_{6-z}F_{z1}Brz2$, $Li_{7-v-z}K_vPS_{6-z}F_{z1}I_{z2}$, $Li_{7-v-z}K_vPS_{6-z}Cl_{z1}Brz2$, $Li_{7-v-z}K_vPS_{6-z}Cl_{z1}I_{z2}$, $Li_{7-v-z}K_vPS_{6-z}Cl_{z1}F_{z2}$, $Li_{7-v-z}K_vPS_{6-z}Br_{z1}I_{z2}$, $Li_{7-v-z}K_vPS_{6-z}Br_{z1}F_{z2}$, $Li_{7-v-z}K_vPS_{6-z}Br_{z1}Clz2$, $Li_{7-v-z}K_vPS_{6-z}I_{z1}F_{z2}$, $Li_{7-v-z}K_vPS_{6-z}I_{z1}Clz2$, $Li_{7-v-z}K_vPS_{6-z}I_{z1}Brz2$,

$Li_{7-v-z}Cu_vPS_{6-z}F_{z1}$, $Li_{7-v-z}Cu_vPS_{6-z}Cl_{z1}$, $Li_{7-v-z}Cu_vPS_{6-z}Br_{z1}$, $Li_{7-v-z}Cu_vPS_{6-z}I_{z1}$, $Li_{7-v-z}CU_vPS_{6-z}F_{z1}Clz2$, $Li_{7-v-z}Cu_vPS_{6-z}F_{z1}Brz2$, $Li_{7-v-z}Cu_vPS_{6-z}F_{z1}I_{z2}$, $Li_{7-v-z}Cu_vPS_{6-z}Cl_{z1}Brz2$, $Li_{7-v-z}Cu_vPS_{6-z}Cl_{z1}I_{z2}$, $Li_{7-v-z}Cu_vPS_{6-z}Cl_{z1}F_{z2}$, $Li_{7-v-z}Cu_vPS_{6-z}Br_{z1}I_{z2}$, $Li_{7-v-z}Cu_vPS_{6-z}Br_{z1}F_{z2}$, $Li_{7-v-z}Cu_vPS_{6-z}Br_{z1}Clz2$, $Li_{7-v-z}Cu_vPS_{6-z}I_{z1}F_{z2}$, $Li_{7-v-z}Cu_vPS_{6-z}I_{z1}Clz2$, $Li_{7-v-z}Cu_vPS_{6-z}I_{z1}Brz2$,

$Li_{7-2v-z}Mg_vPS_{6-z}F_{z1}$, $Li_{7-2v-z}Mg_vPS_{6-z}Cl_{z1}$, $Li_{7-2v-z}Mg_vPS_{6-z}Br_{z1}$, $Li_{7-2v-z}Mg_vPS_{6-z}I_{z1}$, $Li_{7-2v-z}Mg_vPS_{6-z}F_{z1}Clz2$, $Li_{7-2v-z}Mg_vPS_{6-z}F_{z1}Brz2$, $Li_{7-2v-z}Mg_vPS_{6-z}F_{z1}I_{z2}$, $Li_{7-2v-z}Mg_vPS_{6-z}Cl_{z1}Brz2$, $Li_{7-2v-z}Mg_vPS_{6-z}Cl_{z1}I_{z2}$, $Li_{7-2v-z}Mg_vPS_{6-z}Cl_{z1}F_z2$, $Li_{7-2v-z}Mg_vPS_{6-z}Br_{z1}I_{z2}$, $Li_{7-2v-z}Mg_vPS_{6-z}Br_{z1}F_{z2}$, $Li_{7-2v-z}Mg_vPS_{6-z}Br_{z1}Clz2$, $Li_{7-2v-z}Mg_vPS_{6-z}I_{z1}F_{z2}$, $Li_{7-2v-z}Mg_vPS_{6-z}I_{z1}Clz2$, $Li_{7-2v-z}Mg_vPS_{6-z}I_{z1}Brz2$,

$Li_{7-v-z}Ag_vPS_{6-z}F_{z1}$, $Li_{7-v-z}Ag_vPS_{6-z}Cl_{z1}$, $Li_{7-v-z}Ag_vPS_{6-z}Br_{z1}$, $Li_{7-v-z}Ag_vPS_{6-z}I_{z1}$, $Li_{7-v-z}Ag_vPS_{6-z}F_{z1}Clz2$, $Li_{7-v-z}Ag_vPS_{6-z}F_{z1}Brz2$, $Li_{7-v-z}Ag_vPS_{6-z}F_{z1}I_{z2}$, $Li_{7-v-z}Ag_vPS_{6-z}Cl_{z1}Brz2$, $Li_{7-v-z}Ag_vPS_{6-z}Cl_{z1}I_{z2}$, $Li_{7-v-z}Ag_vPS_{6-z}Cl_{z1}F_{z2}$, $Li_{7-v-z}Ag_vPS_{6-z}Br_{z1}I_{z2}$, $Li_{7-v-z}Ag_vPS_{6-z}Br_{z1}F_{z2}$, $Li_{7-v-z}Ag_vPS_{6-z}Br_{z1}Clz2$, $Li_{7-v-z}Ag_vPS_{6-z}I_{z1}F_{z2}$, $Li_{7-v-z}Ag_vPS_{6-z}I_{z1}Clz2$, or $Li_{7-v-z}Ag_vPS_{6-z}I_{z1}Brz2$.

In the formulae above, the following conditions may each independently be satisfied: $0 < v \leq 0.7$, $0 < z1 < 2$, $0 < z2 < 1$, $0 < z < 2$, and $z = z1 + z2$; for example, $0 < v \leq 0.7$, $0 < z1 < 2$, $0 < z2 \leq 0.5$, $0 < z < 2$, and $z = z1 + z2$; $0 < v \leq 0.3$, $0 < z1 \leq 1.5$, $0 < z2 \leq 0.5$, $0.2 \leq z \leq 1.8$, and $z = z1 + z2$; $0 < v \leq 0.05$, $0 < z1 \leq 1.5$, $0 < z2 \leq 0.2$, $1.0 \leq z \leq 1.8$, and $z = z1 + z2$; or $0 < v \leq 0.05$, $0 < z1 \leq 1.5$, $0 < z2 \leq 0.2$, $1.0 \leq z \leq 1.5$, and $z = z1 + z2$. When there is no v, z1 or z2 in the formulae above, $v = 0$, $z1 = 0$ or $z2 = 0$. For example, when $z1 = 0$, $z = z2$. For example, when $z2 = 0$, $z = z1$.

The compound represented by Formula 4 may belong to, for example, the cubic crystal system and, more specifically, to the F-43m space group. Additionally, as described above, the compound represented by Formula 4 may be an argyrodite-type sulfide having an argyrodite-type crystal structure. The compound represented by Formula 4 includes, for example, one or more of a monovalent cation element and a divalent cation element substituted for a portion of the lithium site in the argyrodite-type crystal structure, or includes a heterogeneous halogen element, or includes a substituted $SO_n$ anion in the halogen site, and thus, lithium ion conductivity may be further improved, and electrochemical stability to lithium metal may be further improved.

The compound represented by Formula 4 may be, for example, $Li_6PS_5Cl$.

The sulfide-based solid electrolyte used herein may be an argyrodite-type compound including one or more selected from $Li_{7-x}PS_{6-x}Cl_x$, $0 \leq x \leq 2$, $Li_{7-x}PS_{6-x}Br_x$, $0 \leq x \leq 2$, and $Li_{7-x}PS_{6-x}I_x$ where x satisfies the condition of $0 \leq x \leq 2$. In particular, the sulfide-based solid electrolyte included in the solid electrolyte may be an argyrodite-type compound including one or more selected from $Li_6PS_5Cl$, $Li_6PS_5Br$, and $Li_6PS_5I$.

The sulfide-based solid electrolyte may be in powder or a molded form. The solid electrolyte in a molded form may be in the form of, for example, a pellet, sheet, or thin film, but is not necessarily limited to these, and may have various forms depending on the application.

Examples of polymer solid electrolytes are polyethylene oxide, polypropylene oxide, polystyrene (PS), polyphosphazene, polysiloxane, polyvinylidene fluoride-co-hexafluoropropylene (PVDF-HFP), and polyacrylonitrile (PAN), or a combination thereof. The ionic conductivity of this polymer solid electrolyte may be achieved by local segmental motion of the polymer. Polymer solid electrolytes may be prepared by mixing polyether with plasticizer salts and sometimes some liquid plasticizer. This electrolyte may be prepared into a thin film using a solvent evaporation coating method. However, it is not limited thereto, and any suitable polymer solid electrolyte available in the art may be used.

If desired, the solid electrolyte may further include a binder. The binder included in the solid electrolyte layer 1 may be, for example, styrene-butadiene rubber (SBR), polytetrafluoroethylene, polyvinylidene fluoride, polyethylene, etc., but is not limited to these. The binder may be any suitable material that can be used as a binder in the relevant technical field.

An all-solid-state battery according to another example embodiment may include: a cathode including a cathode current collector and a cathode active material layer; and the sub-assembly described above.

The cathode includes a cathode current collector and a cathode active material layer. The cathode current collector may use a metal substrate. Examples of the metal substrate are aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The cathode current collector may be plate-shaped or foil-shaped. The cathode current collector may be omitted.

A cathode active material of the cathode active material layer may be used without limitation as long as it is commonly used in lithium batteries. For example, the cathode active material may be one or more types of complex oxides of lithium and a metal selected from cobalt, manganese, nickel, and combinations thereof, and specific examples thereof may be a compound represented by one of the following formulae: $Li_aA_{1-b}B'_bD'_2$ (where $0.90 \leq a \leq 1.8$, and $0 \leq b \leq 0.5$); $Li_aE_{1-b}B'_bO_{2-c}D'_c$ (where $0.90 \leq a \leq 1.8$, $0 \leq b \leq 0.5$, and $0 \leq c \leq 0.05$); $LiE_{2-b}B'_bO_{4-c}D'_c$ (where $0 \leq b \leq 0.5$, and $0 \leq c \leq 0.05$); $Li_aNi_{1-b-c}Co_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Co_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Co_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cD'_\alpha$ (where $0.90 \leq a \leq 1.8$, $0 \leq b \leq 0.5$, $0 \leq c \leq 0.05$, and $0 < \alpha \leq 2$); $Li_aNi_{1-b-c}Mn_bB'_cO_{2-\alpha}F'_\alpha$ (where $0.90 \leq a \leq 1.8$, $0 \leq b \leq 0.5$, $0 \leq c \leq 0.05$, and $0 < \alpha < 2$); $Li_aNi_{1-b-c}Mn_bB'_cO_{2-\alpha}F'_2$ (where $0.90 \leq a \leq 1.8$, $0 \leq b \leq 0.5$, $0 \leq c \leq 0.05$, and $0 < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$.); $Li_aNiG_bO_2$ (where $0.90 \leq a \leq 1.8$, and $0.001 \leq b \leq 0.1$.); $Li_aCoG_bO_2$ (where $0.90 \leq a \leq 1.8$, and $0.001 \leq b \leq 0.1$.); $Li_aMnG_bO_2$ (where $0.90 \leq a \leq 1.8$, and $0.001 \leq b \leq 0.1$.); $Li_aMn_2G_bO_4$ (where $0.90 \leq a \leq 1.8$, and $0.001 \leq b \leq 0.1$.); $QO_2$; $QS_2$; $LiQS_2$; $V_2O_5$; $LiV_2O_2$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$. Regarding these formulae, A may be Ni, Co, Mn, or a combination thereof; B' may be Al, Ni, Co, Mn, Cr, Fe, Mg, Sr, V, a rare earth element, or a combination thereof; D' may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof. For example, the cathode active material may include one or more types selected from lithium cobalt oxide, lithium nickel oxide, lithium nickel cobalt oxide, lithium nickel cobalt aluminum oxide, lithium nickel cobalt manganese oxide, lithium manganese oxide, lithium iron phosphate, nickel sulfide, copper sulfide, lithium sulfide, iron oxide, and vanadium oxide. For example, the cathode active materials may be $LiCoO_2$, $LiMn_xO_2$($x=1$, 2), $LiNi_{1-x}Mn_xO_{2x}$($0<x<1$), $LiNi_{1-x-y}Co_xMn_yO_2$ ($0 \leq x \leq 0.5$, $0 \leq y \leq 0.5$), $LiFePO_4$, $TiS_2$, $FeS_2$, $TiS_3$, $FeS_3$, etc.

The cathode active material layer may further include an ionic liquid electrolyte. The ionic liquid electrolyte may be non-volatile. The ionic liquid refers to a salt in a liquid state at room temperature or a room-temperature molten salt that has a melting point below room temperature and consists only of ions. The ionic liquid may be one selected from compounds including: a) one or more cations selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and mixtures thereof; and b) one or more anions selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^{2-}$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$ For example, the ionic liquid may include one or more selected from N-methyl-N-propylpyrrolidinium bis(trifluoromethanesulfonyl)imide N-butyl-N-methylpyrrolidium bis(3-trifluoromethylsulfonyl)imide, 1-butyl-3-methylimidazolium bis(trifluoromethylsulfonyl)imide, and 1-ethyl-3-methylimidazolium bis(trifluoromethylsulfonyl)imide. A polymer ionic liquid may include a repeating unit including: a) one or more cations selected from an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, and mixtures thereof; and b) one or more anions selected from $BF_4^-$, $PF_6^-$, $AsF6^-$, $SbF_6^-$, $AlCl_4^-$, $HSO_4^-$, $ClO_4^-$, $CH_3SO_3^-$, $CF_3CO_2^-$, $(CF_3SO_2)_2N^-$, $(FSO_2)_2N^-$, $Cl^-$, $Br^-$, $I^-$, $SO_4^{2-}$, $CF_3SO_3^-$, $(C_2F_5SO_2)_2N^-$, $(C_2F_5SO_2)(CF_3SO_2)N^-$, $NO_3^-$, $Al_2Cl_7^-$, $(CF_3SO_2)_3C^-$, $(CF_3)_2PF_4^-$, $(CF_3)_3PF_3^-$, $(CF_3)_4PF_2^-$, $(CF_3)_5PF^-$, $(CF_3)_6P^-$, $SF_5CF_2SO_3^-$, $SF_5CHFCF_2SO_3^-$, $CF_3CF_2(CF_3)_2CO^-$, $(CF_3SO_2)_2CH^-$, $(SF_5)_3C^-$, and $(O(CF_3)_2C_2(CF_3)_2O)_2PO^-$.

The ionic liquid electrolyte may fill inside the pores of the surface of the cathode active material layer in contact with the solid electrolyte layer. The content of the ionic liquid electrolyte may be about 0.1 parts by weight to about 20 parts by weight, about 0.1 parts by weight to about 15 parts by weight, about 0.1 parts by weight to about 10 parts by weight, or about 0.1 parts by weight to about 5 parts by weight, based on 100 parts by weight of the cathode active material layer not including the ionic liquid electrolyte. The inclusion of ionic liquid electrolytes may result in enhanced ionic conductivity, which improves the charge and discharge characteristics of the battery.

The cathode active material layer may further include a conductive material and a binder. For example, the conductive material may include carbon black, carbon fiber, graphite, or a combination thereof. For example, the carbon black may be acetylene black, Ketjen black, Super P carbon, channel black, furnace black, lamp black, thermal black, or a combination thereof. Graphite may be natural graphite or artificial graphite. Combinations including at least two of the foregoing materials may be used. The cathode active material layer may additionally include a conductive material of a different composition in addition to the conductive material described above. Additional conductive materials include: electrically conductive fibers such as metal fibers; fluorocarbon powder; metal powders such as aluminum powder or nickel powder; conductive whiskers such as zinc oxide or potassium titanate; polyethylene derivatives; or a combination thereof. The content of the conductive material may be in the range of about 1 part by weight to about 10 parts by weight, for example, about 2 parts by weight to about 7 parts by weight, based on 100 parts by weight of the cathode active material.

When the amount of the conductive material is within these ranges, for example, about 1 part by weight to about 10 parts by weight, the electrical conductivity of the cathode may be adequate.

The binder may improve adhesion between components of the cathode and to the cathode current collector. Examples of the binder are polyacrylic acid (PAA), polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene-butadiene rubber, fluorinated rubber, copolymers thereof, or combinations thereof. The content of the binder may be in the range of about 1 part by weight to about 10 parts by weight, for example, about 2 parts by weight to about 7 parts by weight, based on 100 parts by weight of the cathode active material. When the binder content is within these ranges, the adhesion of the cathode active material layer to the cathode current collector may be further improved and a decrease in energy density of the cathode active material layer may be suppressed.

Solvents such as N-methylpyrrolidone, acetone, and water may be used. The contents of the cathode active material, conductive material, binder, and solvent are at levels commonly used in lithium batteries.

A plasticizer may be added to the cathode active material composition to form pores inside the cathode active material layer.

All-solid-state batteries may include thin-film laminated batteries, laminated ceramic batteries, lithium-sulfur batteries, or lithium-air batteries. For example, an all-solid-state battery may be an all-solid secondary battery.

A method of preparing an all-solid-state battery according to another example embodiment includes preparing a solid electrolyte molded body; providing a solid electrolyte layer with an uneven surface by surface-treating the solid electrolyte molded body; preparing a solid electrolyte layer having one surface on which a porous carbon material-containing middle layer is formed by applying and drying a porous carbon material-containing composition; obtaining a first laminate comprising the anode current collector/the porous carbon material-containing middle layer/the solid electrolyte layer/a first metallic lithium/a first metal foil by disposing the anode current collector on the porous carbon material-containing middle layer, and attaching, on the other surface of the solid electrolyte layer opposite to the surface on which the porous carbon material-containing middle layer is formed, the first metal foil with the first metallic lithium disposed thereon; obtaining a second laminate comprising the anode current collector/the second porous carbon material-containing middle layer with lithium-free pores/the first porous carbon material-containing middle layer with pores partially or fully filled with lithium/the solid electrolyte layer/the first metallic lithium/the first metal foil by pre-lithiating the first laminate under vacuum; forming a third metal-containing middle layer by removing, from the second laminate, the first metal foil on which the first metallic lithium is disposed and disposing a second metal foil between the second porous carbon material-containing middle layer and the anode current collector, thereby forming the sub-assembly described above; and disposing a cathode on the solid electrolyte layer of the sub-assembly.

Using the method described above, an all-solid-state battery with a strengthened mechanical structure and improved charge/discharge characteristics may be manufactured.

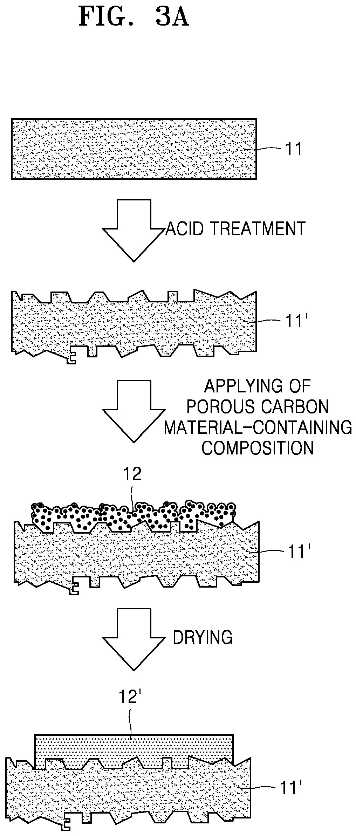

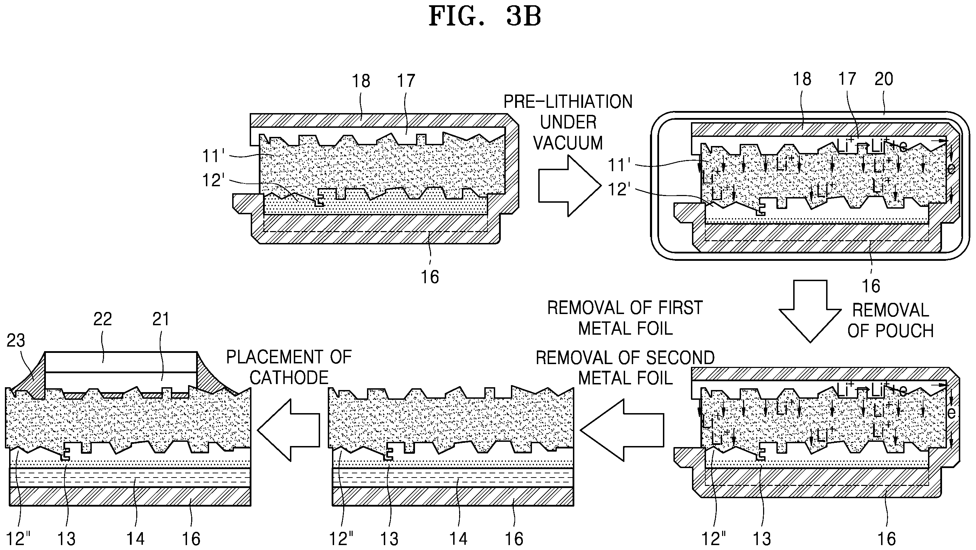

FIG. 3A shows a schematic process flowchart for a method of preparing an anode portion including a solid electrolyte layer and a middle layer according to an embodiment, and FIG. 3B shows a schematic process flow chart for a method of preparing an all-solid-state battery according to an embodiment

As shown in FIGS. 3A and 3B, a solid electrolyte molded body 11 is prepared. The solid electrolyte molded body 11 may be manufactured by, for example, heat treating a solid electrolyte material, specifically a precursor of an oxide-based solid electrolyte material.

The oxide-based solid electrolyte may be prepared by contacting precursors in stoichiometric amounts to form a mixture and heat-treating the mixture. Contacting may include milling, for example, ball milling or grinding. The mixture of precursors mixed with a stoichiometric composition may be subjected to a first heat treatment in an oxidizing atmosphere to prepare the first heat treatment result. The first heat treatment may be performed for 1 hour to 36 hours at a temperature range of less than 1000 °C. The result of the first heat treatment may be pulverized. Grinding of the first heat treatment result may be performed dry or wet. Wet grinding may be performed by, for example, mixing the first heat treatment product with a solvent such as methanol and then milling the mixture using a ball mill or the like for 0.5 hours to 10 hours. Dry grinding may be performed by milling, for example, a ball mill or the like without a solvent. The particle diameter of the pulverized first heat treatment product may be about 0.1 $\mu$m to about 10 $\mu$m or about 0.1 $\mu$m to about 5 $\mu$m. The pulverized first heat treatment product may be dried. The pulverized first heat treatment result may be mixed with a binder solution and formed into pellets, or simply pressed at a pressure of about 1 ton to about 10 tons to form pellets. The molded body may be subjected to a second heat treatment at a temperature of less than or equal to 1000°C for 1 hour to 36 hours. The solid electrolyte molded body 11, which is a sintered product, is obtained through the second heat treatment. The second heat treatment may be performed, for example, at 550°C to 1000°C. The first heat treatment time may be 1 hour to 36 hours. To obtain a sintered product, the second heat treatment temperature may be higher than the first heat treatment temperature. For example, the second heat treatment temperature may be 10°C or more, 20°C or more, 30°C or more, or 50°C or more higher than the first heat treatment temperature. The molded product may be subjected to second heat treatment in one or more atmospheres of an oxidizing atmosphere and a reducing atmosphere. The second heat treatment may be performed in a) an oxidizing atmosphere, b) a reducing atmosphere, or c) an oxidizing atmosphere and a reducing atmosphere. Alternatively, the oxide-based solid electrolyte may be prepared using a tape casting method. For example, an oxide solid electrolyte slurry is prepared by mixing oxide-based solid electrolyte powder with a binder and a solvent. The oxide solid electrolyte slurry is ball milled for 12 hours to 24 hours and aged for 1 to 4 hours. The aged oxide solid electrolyte slurry is poured onto a doctor blade set at a predetermined height, and tape casting is performed by moving a PET substrate film at a speed of about 1.0 m/min to about 3.0 m/min to obtain a green sheet having the thickness of several tens of micrometers. The green sheet is subjected to a stacking process, a pressing process, and a cutting process and sintered at a temperature of 1000°C to 1350°C to obtain a sintered body. The sintered body can be disposed in a mold and pressurized to prepare a solid electrolyte mold body 11 having the thickness of several hundred micrometers.

Next, the solid electrolyte molded body 11 is surface-treated to provide a solid electrolyte layer 11' with an uneven treated surface. Surface treatment includes chemical treatment, electrolytic polishing, as described above, and for example, acid treatment and drying may be performed to obtain a solid electrolyte layer 11' with an uneven treated surface. Acid treatment may be performed using hydrochloric acid, phosphoric acid, sulfuric acid, nitric acid, hydrofluoric acid, or a mixture of these acids. For example, acid treatment may be performed at a concentration of about 0.1 M to about 10 M for 30 minutes to 1 hour. For example, acid treatment may be performed with hydrochloric acid at a concentration of about 0.1 M to about 1 M for 30 minutes to 1 hour. After the acid treatment, washing with for example, ethanol, and then drying in a drying room may be performed to obtain the solid electrolyte layer 11' with an uneven surface.

Next, a porous carbon material-containing composition 12 is applied onto one surface of the solid electrolyte layer 11'. Thereafter, the solid electrolyte layer 11' coated with the porous carbon material-containing composition is dried to manufacture the solid electrolyte layer 11' on which the porous carbon material-containing middle layer 12' is formed.

The porous carbon material-containing composition 12 may include a one-dimensional porous carbon material and a three-dimensional porous carbon material. The porous carbon material-containing composition 12 may further include a two-dimensional porous carbon material. The porous carbon material-containing composition 12 may further include metal nanoparticles, metal nanowires, metal nanotubes, metal nanofibers, metal nanosheets, metal nanorods, or alloys thereof. The porous carbon material-containing composition 12 may further include a binder. The specific types and contents of the carbon material, metal material, and binder included in the porous carbon material-containing composition 12 are the same as described above, and thus the following description will be omitted. Non-limiting examples of application methods include doctor blade, bar coating, screen printing, spray coating, etc. The thickness of the porous carbon material-containing middle layer 12' may be, for example, about 0.1 $\mu$m to about 20 $\mu$m.

Next, an anode current collector 16 is disposed on the porous carbon material-containing middle layer 12', and a first metal foil 18, on which a first metallic lithium 17 is disposed, is attached on the other surface of the solid electrolyte layer 11' opposite to the surface on which the porous carbon material-containing middle layer 12' is formed, to obtain a first laminate comprising an anode current collector 16/ a porous carbon material-containing middle layer 127a solid electrolyte layer 1 1'/the first metallic lithium 17/the first metal foil 18. The first metal foil 18 may include a material that does not react with lithium, that is, does not form any alloy or compound with lithium. The first metal foil 18 may include the same material as the material for the anode current collector 6 described above.

Next, the first laminate is pre-lithiated under vacuum to obtain a second laminate comprising the anode current collector 16/a second porous carbon material-containing middle layer with lithium-free pores 13/a first porous carbon material-containing middle layer with pores partially or fully filled with lithium 12"/the solid electrolyte layer 11'/the first metallic lithium 17/the first metal foil 18. To create a vacuum environment, the first laminate is disposed inside a pouch and sealed. Pre-lithiation is carried out at temperatures between about 25°C and about 60°C. The pre-lithiation process is performed by wrapping the solid electrolyte layer 11' on which the porous carbon material-containing middle layer 12' is formed and the anode current collector 16 with the first metal foil 18 on which the first metallic lithium 17 is disposed. Under the condition that direct electrical contact is realized between the anode current collector 16 and the metallic lithium, electrons move from the anode current collector 16 to the solid electrolyte layer 11' due to the potential difference between the metallic lithium and the porous carbon material. Lithium ions are released from the first metallic lithium 17 into the solid electrolyte layer 11'. Lithium ions in the solid electrolyte layer 11' are inserted into a porous carbon material to plate with lithium (LiCe) to obtain charge neutrality. Due to this pre-lithiation process, the all-solid-state battery is not easily short-circuited and the initial coulombic efficiency (ICE) thereof does not deteriorate even when charging and discharging are repeatedly performed.

Next, the pouch is removed, and the first metal foil 18 on which the first metallic lithium 17 is disposed is removed from the second laminate. Thereafter, a second metal foil is disposed between the second porous carbon material-containing middle layer 13 and the anode current collector 16 to produce an anode-solid electrolyte layer sub-assembly in which the third metal-containing middle layer 14 is formed.

A cathode is disposed on the solid electrolyte layer 11' of the anode-solid electrolyte layer sub-assembly, thereby completing the manufacture of a battery. A cathode active material layer 21 may include the ionic liquid electrolyte and the cathode active material as described above. The uneven surface of the solid electrolyte layer 11' in contact with the cathode active material layer 21 and the inside of the cathode may be impregnated with the ionic liquid electrolyte. The battery is prepared by disposing the pre-lithiated anode-solid electrolyte layer sub-assembly and the cathode into an aluminum pouch and sealing the same under vacuum. At this time, a part of each of the cathode current collector 22 and the anode current collector 16 is allowed to protrude the aluminum pouch so as not to break the vacuum of the battery, thereby forming a cathode terminal and an anode terminal, respectively.

Hereinafter, examples and comparative examples of the present disclosure will be described. However, the following example is only an example of the present disclosure, and the present disclosure is not limited to the following example.

Examples

Example 1: Preparation of all-solid-state secondary battery

(Preparation of sub-assembly of anode-solid electrolyte layer)

A $Li_{6.5}La_3Zr_{1.5}Ta_{0.5}O_{12}$ solid electrolyte pellet (Ta doped LLZO, Toshima Co.) having the thickness of 500 $\mu$m and the diameter of 14 mm was prepared. The LLZO solid electrolyte was acid treated with 1 M hydrochloric acid for 30 minutes, then washed with ethanol and dried in a drying room to provide a solid electrolyte layer, including $Li_{6.5}La_3Zr_{1.5}Ta_{0.5}O_{12}$ solid electrolyte pellets, with an uneven surface.

Separately, carbon black (CB, ENSACO 250G, Imerys Co.), which is a three-dimensional porous carbon material, and single-walled carbon nanotubes (SWCNT, TUBALL™ BATT $H_2O$, 0.4%, OCSiAl), which are a one-dimensional porous carbon material, were added to a mixture including water and polyvinyl alcohol grafted polyacrylic acid (PVA-g-10PAA), which is an aqueous binder, and then, stirred using a mixer (Thinky Corporation, AR-100) to prepare a porous carbon material- containing composition. Polyvinyl alcohol grafted polyacrylic acid (PVA-g-10PAA) was synthesized by graft polymerizing acrylic acid monomer to a polyvinyl alcohol backbone according to the method disclosed in J. He, L. Zhang, Journal of Alloys and Compounds 763 (2018) 228-240.

A porous carbon material-containing composition was applied to one surface of the solid electrolyte layer of the $Li_{6.5}La_3Zr_{1.5}Ta_{0.5}O_{12}$ solid electrolyte pellets and dried at room temperature for 20 min to prepare a solid electrolyte layer with a porous carbon material-containing middle layer thereon having a thickness of about 6.5 $\mu$m. The porous carbon material-containing middle layer included 94.8 wt% of carbon black, 0.2 wt% of single-walled carbon nanotubes, and 5 wt% of polyvinyl alcohol grafted polyacrylic acid, based on the total weight of the middle layer.

An anode current collector, on which a 20 $\mu$m thick lithium metal was coated with 10 $\mu$m thick copper, was disposed on the porous carbon material-containing middle layer, and the other surface of the solid electrolyte layer opposite to the surface on which the porous carbon material-containing middle layer is formed, was wrapped with a 10 $\mu$m thick first copper foil (Honjo Metal Co., Ltd) with a 20 $\mu$m thick first metallic lithium disposed thereon to obtain a first laminate comprising an anode current collector/a porous carbon material-containing middle layer/a solid electrolyte layer/a first metallic lithium/first copper foil.

The first laminate was disposed in a sealed aluminum pouch and maintained at 60°C for 10 hours (pre-lithiation) to obtain a second laminate comprising an anode current collector/a second porous carbon material-containing middle layer that has lithium-free pores and has the thickness of about 2.5 $\mu$m/a first porous carbon material-containing middle layer that has pores partially or fully filled with lithium and has the thickness of about 4 $\mu$m (pore size: 20 nm, porosity: 50%)/a solid electrolyte layer having the thickness of 500 $\mu$m/a first metal lithium having the thickness of 20 $\mu$m/a first copper foil having the thickness of 10 $\mu$m.

The second laminate was taken out of the sealed aluminum pouch, and the anode current collector and the first copper foil (Honjo Metal Co., Ltd) on which the first metallic lithium was disposed, were removed therefrom, and then a 10 $\mu$m thick secondary copper foil (Honjo Metal Co., Ltd) on which 20 $\mu$m thick second metallic lithium was disposed, was disposed with a diameter of 13 mm between the second porous carbon material-containing middle layer and the anode current collector, to prepare an anode-solid electrolyte layer sub-assembly in which a copper-coated anode current collector having the thickness of 10 $\mu$m, a third lithium metal-containing middle layer having the thickness of about 10 $\mu$m, a second porous carbon material-containing middle layer that has lithium-free pores and has the thickness of about 2.5 $\mu$m, a first porous carbon material-containing middle layer that has pores partially or fully filled with lithium and has the thickness of about 4 $\mu$m, and a solid electrolyte layer having the thickness of 500 $\mu$m were arranged in this stated order.

(Preparation of cathode)

$LiCoO_2$ (LCO, Samsung SDI) was prepared as a cathode active material. Carbon black (Super P® Li, Imerys Co.) was prepared as a conductive material. Polyvinylidene fluoride (Solef®5130, Solvay Co.) was prepared as a binder. The binder was used in the form of a solution dissolved in NMP at a ratio of 5 wt%. Next, these materials were mixed in a weight ratio of cathode active material: conductive material: binder = 94:3:3 to prepare a composition for forming a cathode active material layer. The composition was applied to a thickness of 46 μm using an applicator on a 9 μm thick aluminum foil (Nippon Foil Mfg. Co., LTD) current collector, dried at 120°C for 12 hours, and then pressed to produce a cathode including a cathode active material layer.

The cathode active material layer of the prepared cathode was impregnated with an electrolyte containing 2.0 M of lithium bis(fluorosulfonyl)imide (LiFSI, 99.9%, water content < 10 ppm) dissolved in 1-ethyl-3-methylimidazolium bis(fluorosulfonyl)imide (EMIM-FSI, 99.9%, water content < 20 ppm, Kanto Chemical Co. Inc.), which is an ionic liquid.

(Preparation of all-solid-state secondary battery)

The cathode was disposed on a sub-assembly of the anode-solid electrolyte layer and sealed under vacuum to produce a 2032-type coin cell all-solid-state secondary battery.

Example 2: Preparation of all-solid-state secondary battery

A 2032-type coin cell all-solid-state secondary battery was prepared in the same manner as in Example 1, except that, when preparing a porous carbon material-containing composition, on which a porous carbon material-containing middle layer that has the thickness of about 8 μm, carbon black (CB, C45, Imerys Co.) was used as a three-dimensional porous carbon material, and a second laminate comprising an anode current collector/a second porous carbon material-containing middle layer that has lithium-free pores and has the thickness of about 4 μm /a first porous carbon material-containing middle layer that has pores partially or fully filled with lithium and has the thickness of about 4 μm (pore size: 20 nm, porosity: 50%)/a solid electrolyte layer having the thickness of 500 μm/a first metallic lithium having the thickness of 20 μm/a first copper foil having the thickness of 10 μm, was obtained.

Example 3: Preparation of all-solid-state secondary battery

A 2032-type coin cell all-solid-state secondary battery was prepared in the same manner as in Example 1, except that, when preparing a porous carbon material-containing composition, silver nanoparticles with a diameter of 30 nm were added, and a solid electrolyte layer, on which a porous carbon material-containing middle layer that has the thickness of about 7.5 μm and includes 60 wt% of carbon black, 0.2 wt% of single-walled carbon nanotubes, 34.8 wt% silver nanoparticles, and 5 wt% polyvinyl alcohol-grafted polyacrylic acid based on the total weight of the middle layer was formed, was prepared, and a second laminate comprising an anode current collector/a second porous carbon material-containing middle layer that has lithium-free pores and has the thickness of about 3.5 μm/a first porous carbon material-containing middle layer that has pores partially or fully filled with lithium and has the thickness of about 4 μm (pore size: 30 nm, porosity: 50%)/a solid electrolyte layer having the thickness of 500 μm/a first metallic lithium having the thickness of 20 μm/a first copper foil having the thickness of 10 μm, was obtained.

Comparative Example 1: Preparation of all-solid-state secondary battery

A 2032-type coin cell all-solid-state secondary battery was prepared in the same manner as in Example 1, except that, when preparing a porous carbon material-containing composition, the sub-assembly of the anode-solid electrolyte layer was obtained according to the method below.

When preparing a composition containing porous carbon materials, three-dimensional porous carbon material carbon black (CB, ENSACO 250G, IMERYS Co.) was used alone as a porous carbon material, and a solid electrolyte layer, on which a porous carbon material-containing middle layer that has the thickness of about 7 μm and includes 95 wt% of carbon black and 5 wt% of polyvinyl alcohol-grafted polyacrylic acid based on the total weight of the middle layer was formed, was prepared.

An anode current collector on which a 20 μm thick lithium metal was coated with 10 μm thick copper, was disposed on the porous carbon material-containing middle layer, and the other surface of the solid electrolyte layer on which the porous carbon material-containing middle layer was formed, was wrapped with 10 μm thick copper foil (Honjo Metal Co., Ltd on which a 20 μm thick lithium was disposed by cold isotactic pressing (CIP) at 25°C for 3 minutes at 250 MPa to form a sub-assembly comprising an anode current collector/a porous carbon material-containing middle layer/a solid electrolyte layer/a metallic lithium/a copper foil.

Comparative Example 2: Preparation of all-solid-state secondary battery

A 2032-type coin cell all-solid-state secondary battery was prepared in the same manner as in Example 1, except that, when preparing a composition containing porous carbon materials, three-dimensional porous carbon material carbon black (CB, ENSACO 250G, Imerys Co.) was used alone as a porous carbon material, a solid electrolyte layer, on which a porous carbon material-containing middle layer that has the thickness of about 7 $\mu$m and includes 95 wt% of carbon black and 5 wt% of polyvinyl alcohol-grafted polyacrylic acid based on the total weight of the middle layer was formed, was prepared, and a second laminate comprising an anode current collector/a second porous carbon material-containing middle layer that has lithium-free pores and has the thickness of about 20 nm/a first porous carbon material-containing middle layer that has pores partially or fully filled with lithium and has the thickness of about 4 $\mu$m (pore size: 20 nm, porosity: 40%)/a solid electrolyte layer having the thickness of 500 $\mu$m/a first metallic lithium having the thickness of 20 $\mu$m/a first copper foil having the thickness of 10 $\mu$m, was obtained.

Comparative Example 3: Preparation of all-solid-state secondary battery

A 2032-type coin cell all-solid-state secondary battery was prepared in the same manner as in Example 1, except that, when preparing a composition containing porous carbon materials, three-dimensional porous carbon material carbon black (CB, C45, Imerys Co.) was used alone as a porous carbon material, a solid electrolyte layer, on which a porous carbon material-containing middle layer that has the thickness of about 7 $\mu$m and includes 95 wt% of carbon black and 5 wt% of polyvinyl alcohol-grafted polyacrylic acid based on the total weight of the middle layer was formed, was prepared, and a second laminate comprising an anode current collector/a second porous carbon material-containing middle layer that has lithium-free pores and has the thickness of about 30 nm/a first porous carbon material-containing middle layer that has pores partially or fully filled with lithium and has the thickness of about 4 $\mu$m (pore size: 30 nm, porosity: 40%)/a solid electrolyte layer having the thickness of 500 $\mu$m/a first metallic lithium having the thickness of 20 $\mu$m/a copper foil having the thickness of 10 $\mu$m, was obtained.

Evaluation Example 1: SEM-AES analysis

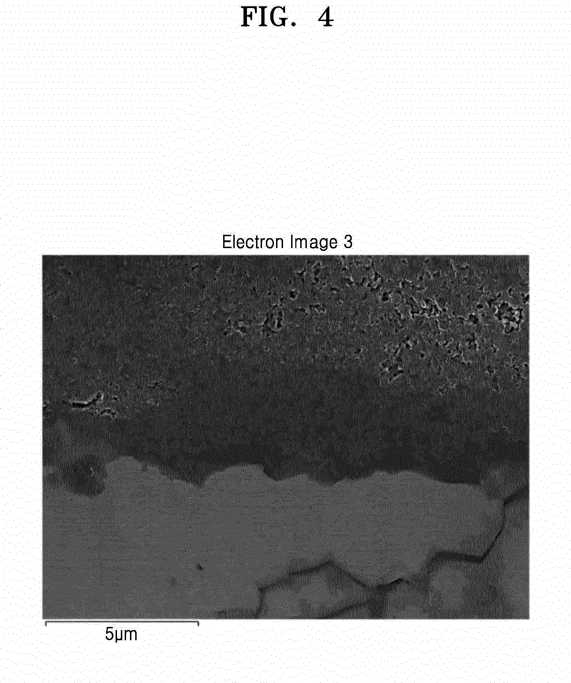

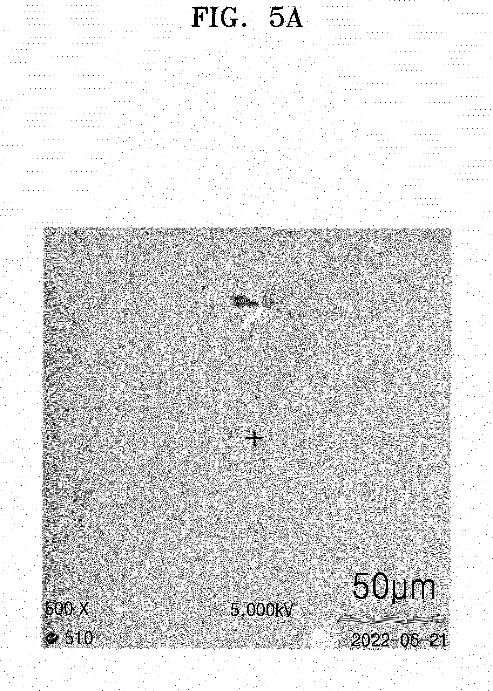

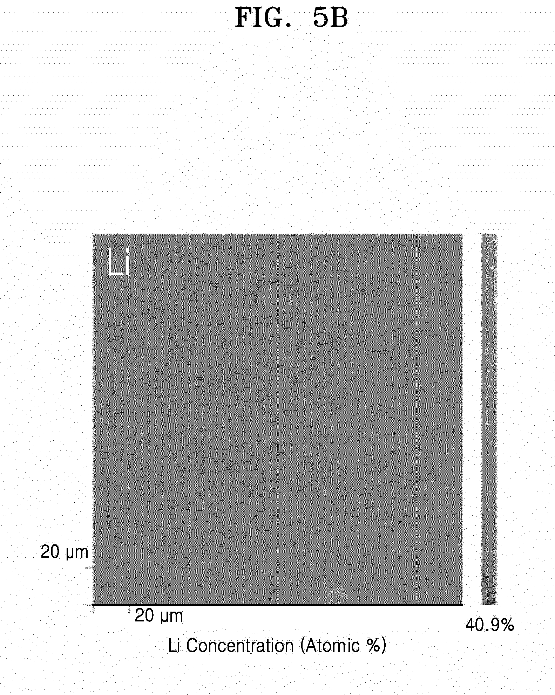

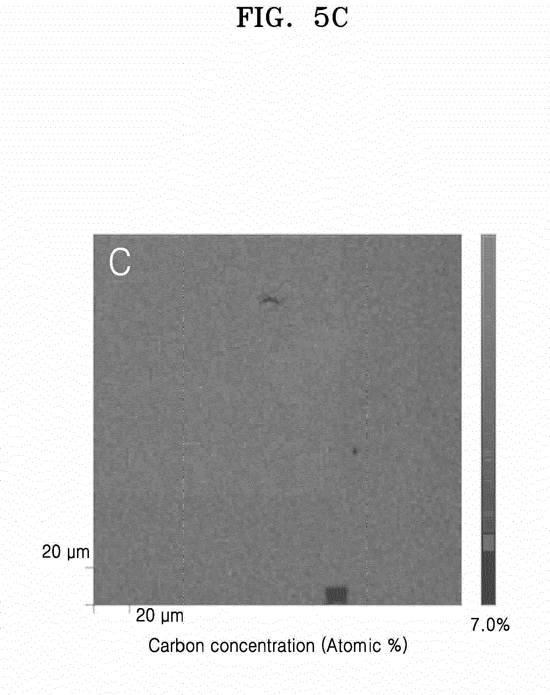

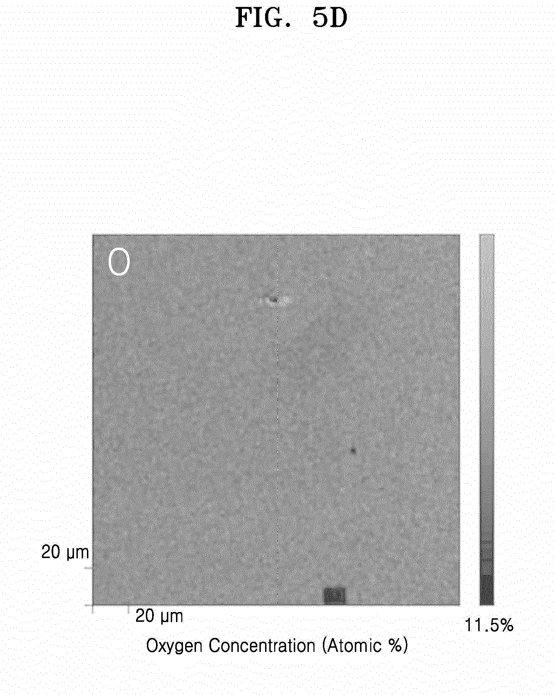

The all-solid secondary battery prepared according to Example 1 was disassembled, and the sub-assembly of the anode-solid electrolyte layer was analyzed by scanning electron microscope (SEM) /auger electron spectroscopy (AES). The SEM analysis results (cross-sectional view) are shown in FIG. 4, and the AES analysis results (top view) are shown in FIGS. 5A, 5B, 5C, and 5D.

Referring to FIG. 4, it can be seen that regarding the anode-solid electrolyte layer sub-assembly of Example 1, in the case of the first porous carbon material-containing middle layer in contact with the solid electrolyte layer, a porous carbon material-containing layer with pores partially or fully filled with lithium and was formed to a thickness of about 2.5 $\mu$m, and in the case of the second porous carbon material-containing middle layer on the first porous carbon material-containing middle layer, a porous carbon material-containing layer that has lithium-free pores was formed to a thickness of about 4 $\mu$m.

Referring to FIGS. 5A to 5D, it was confirmed that after pre-lithiation in the anode-solid electrolyte layer sub-assembly of Example 1, the first porous carbon material-containing middle layer included lithium, carbon, and oxygen.

Evaluation Example 2: X-ray photoelectron spectroscopy (XPS) Analysis

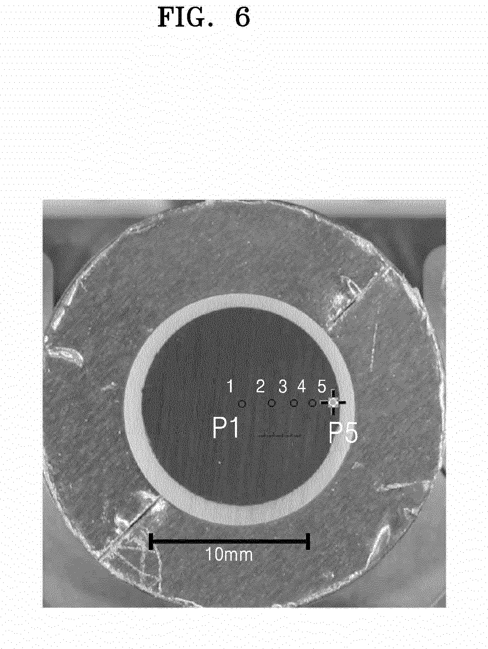

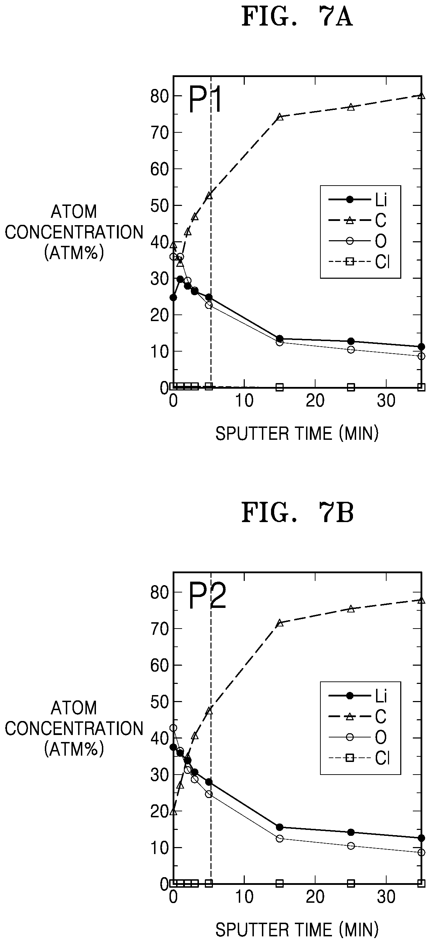

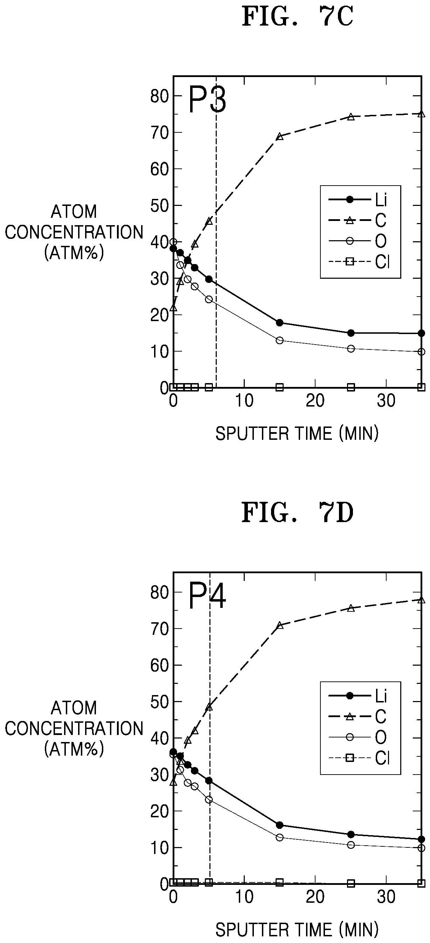

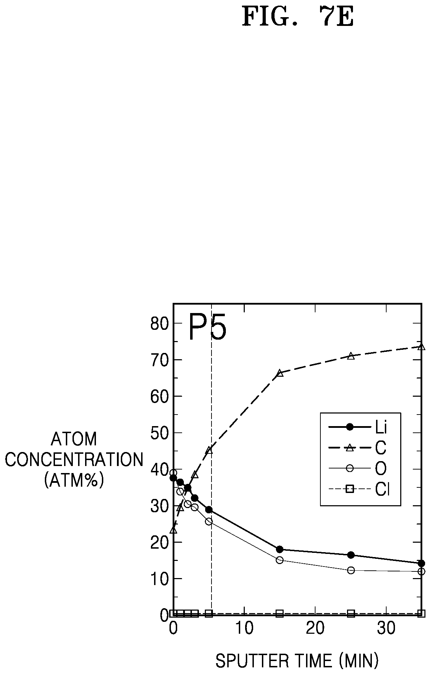

The first laminate of the all-solid secondary battery prepared according to Example 1 was packed under vacuum and maintained at 60°C for 16 hours (pre-lithiation). Then, regarding the porous carbon material-containing middle layer on the solid electrolyte layer, the surface of the middle layer from P1 (center) to P5 (edge) shown in FIG. 6 was analyzed by XPS. Results thereof are shown in FIGS. 7A, 7B, 7C, 7D, and 7E.

Thermo K$\alpha$ XPS equipped with Monochromatic Al-K$\alpha$ (hv = 1486.6 eV) was used as the XPS analysis device. Survey scans had a pass energy of 280 eV (1 eV/step) and each scan took 7 minutes. The HR core level scan had a pass energy of 55 eV (0.1 eV/energy step). For the Ar$^+$ ion sputtering, three cycles of 1 minute each were performed on a $1 \times 1$ mm$^2$ area with a 1 kV accelerating voltage, followed by one cycle of 2 minutes on a $1 \times 1$ mm$^2$ area with a 1 kV accelerating voltage, and then three cycles of 10 minutes each on a $1 \times 1$ mm$^2$ area with a 2 kV accelerating voltage.

Referring to FIGS. 7A to 7E, it can be seen that the pre-lithiated porous carbon material-containing middle layer of the all-solid-state secondary battery prepared according to Example 1 has similar distributions of lithium, carbon, oxygen, and chlorine from P1 (center) to P5 (edge).

Accordingly, it can be seen that in the all-solid secondary battery prepared according to Example 1, the probability of localized current concentration is reduced because lithium is evenly deposited due to pre-lithiation, resulting in the decrease in the risk of short circuit during charging and discharging.

Evaluation Example 3: Charge/discharge experiment (I)

All-solid-state secondary batteries prepared according to Example 1, Example 2, and Comparative Examples 1 to 3 were performed in a constant temperature bath at 25°C.

For each all-solid-state secondary battery, the first cycle was charged with a constant current of 0.3 mA/cm$^2$ until the battery voltage reached 4.5 V. Subsequently, discharge was performed at a constant current of 0.3 mA/cm$^2$ until the battery voltage reached 2.75 V.

The second to fourth cycles were charged at a constant current of 0.5 mA/cm$^2$ until the battery voltage reached 4.5 V. Next, discharge was performed at a constant current of 0.5 mA/cm$^2$ until the battery voltage reached 2.75 V.

The 5th to 7th cycles were charged with a constant current of 1.0 mA/cm$^2$ until the battery voltage reached 4.5 V. Next, discharge was performed at a constant current of 1.0 mA/cm$^2$ until the battery voltage reached 2.75 V.

The 8th to 10th cycles were charged with a constant current of 1.6 mA/cm$^2$ until the battery voltage reached 4.5 V. Subsequently, discharge was performed at a constant current of 1.6 mA/cm$^2$ until the battery voltage reached 2.75 V.

The 11th to 13th cycles were charged with a constant current of 2.0 mA/cm$^2$ until the battery voltage reached 4.5 V. Subsequently, discharge was performed at a constant current of 2.0 mA/cm$^2$ until the battery voltage reached 2.75 V.

The 14th to 16th cycles were charged with a constant current of 2.5 mA/cm$^2$ until the battery voltage reached 4.5 V. Subsequently, discharge was performed at a constant current of 2.5 mA/cm$^2$ until the battery voltage reached 2.75 V.

After the 17th cycle, the battery was charged at a constant current of 1.6 mA/cm$^2$ until the battery voltage reached 4.5 V. Next, discharge was repeatedly performed at a constant current of 1.6 mA/cm$^2$ until the battery voltage reached 2.75 V, and the area capacity (AC) was examined. A total of 26 cycles of charge and discharge were performed.

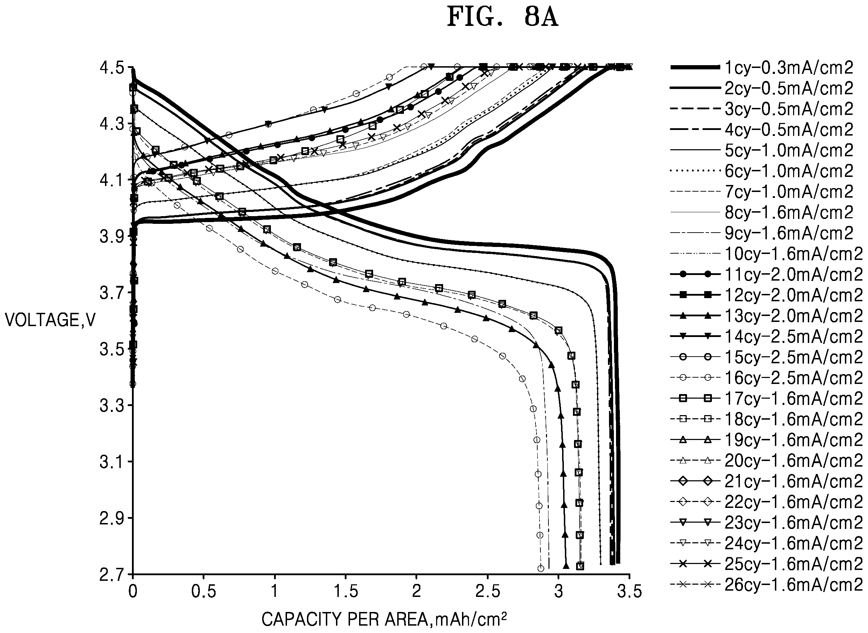

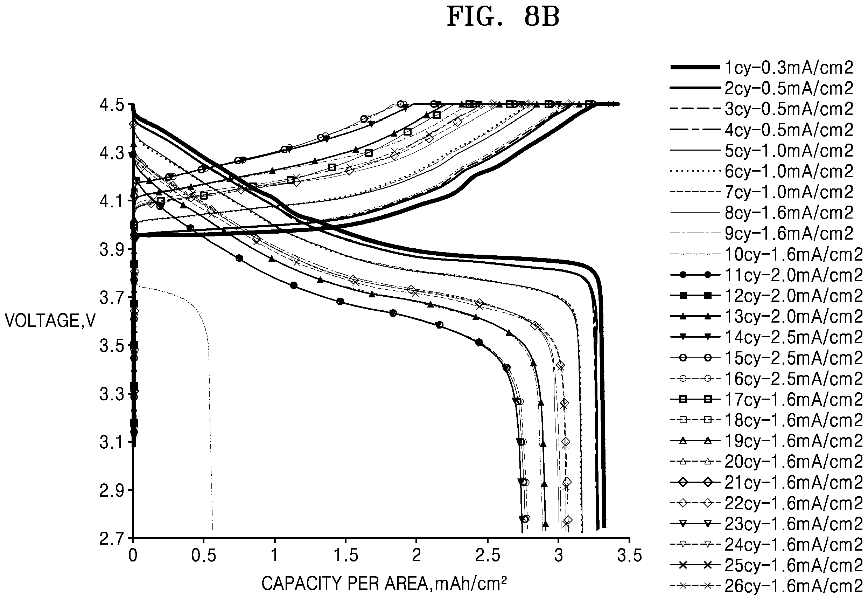

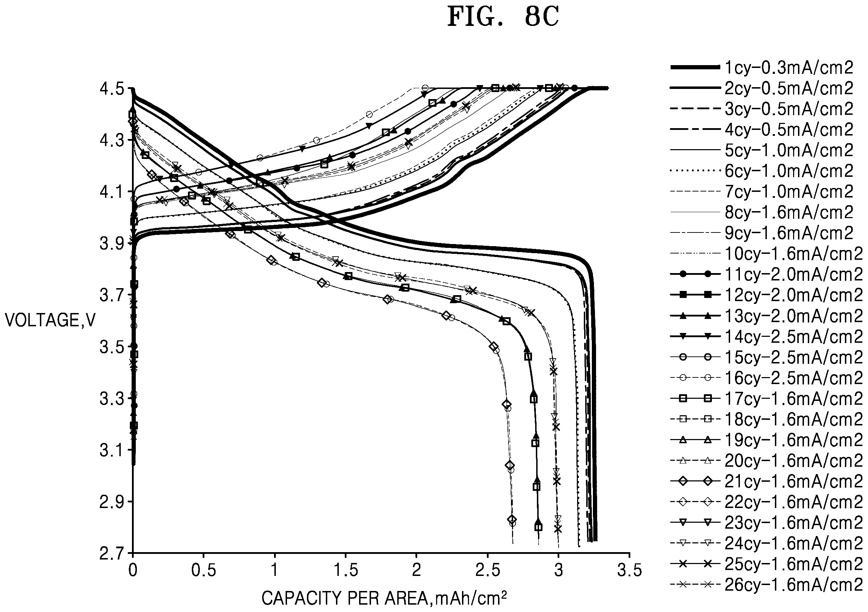

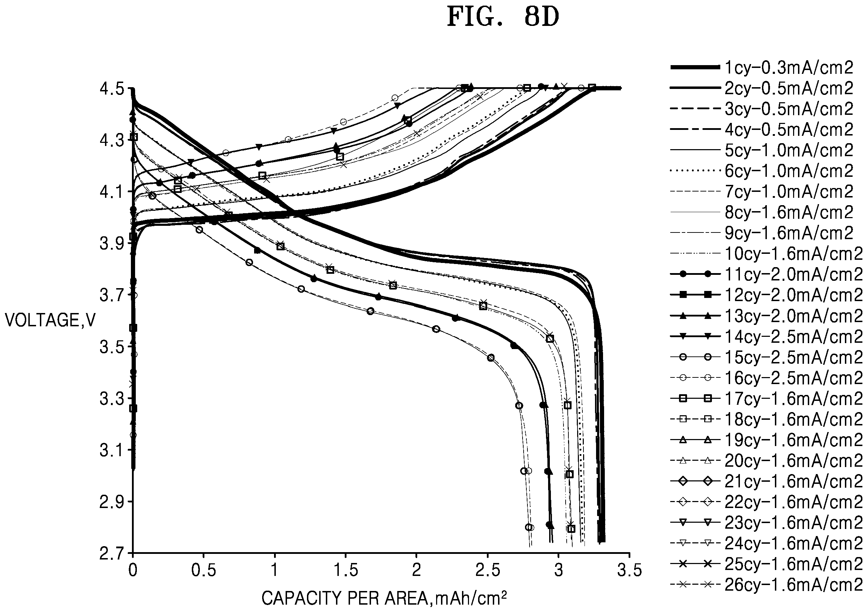

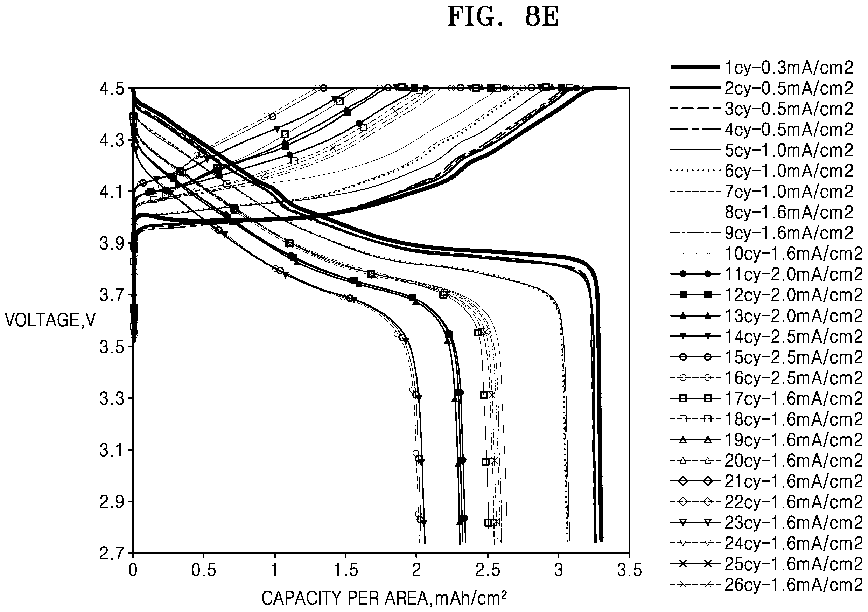

In all charge/discharge cycles, there was a 1-minute pause after one charge/discharge cycle. Results thereof are shown in Figures 8A, 8B, 8C, 8D, and 8E.

Referring to FIG. 8A, the all-solid-state secondary battery prepared according to Example 1 showed a stable capacity per area of about 2.85 mAh/cm$^2$ to 3.4 mAh/cm$^2$ for a total of 26 cycles. Referring to FIG. 8B, the all-solid-state secondary battery prepared according to Example 2 showed a low area capacity with a 10th cycle charging cutoff voltage of 4.1 V, but a stable capacity-per-area of about 2.75 mAh/cm$^2$ to 3.35 mAh/cm$^2$ during other cycles. Referring to FIGS. 8C and 8D, the all-solid-state secondary batteries prepared according to Comparative Example 1 and Comparative Example 2 were about 2.6 mAh/cm$^2$ to 3.3 mAh/cm$^2$ and about 2.75 mAh/cm$^2$ to 3.35 mAh/cm2 for a total of 26 cycles. It was found that the capacity per area was wide compared to Example 1. Referring to FIG. 8E, the all-solid-state secondary battery prepared according to Comparative Example 3 showed a very wide range of capacity per area of 2.05 mAh/cm$^2$ to 3.3 mAh/cm$^2$ for a total of 26 cycles.

Evaluation Example 4: Charge/discharge experiment (II)

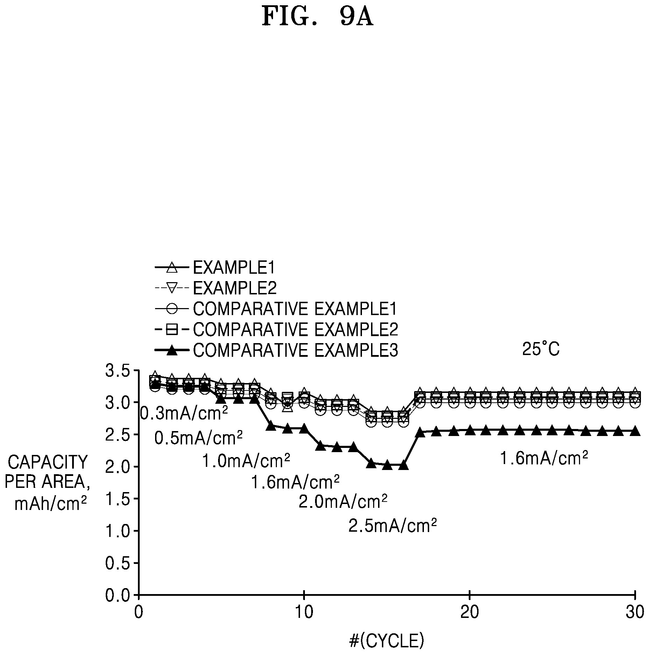

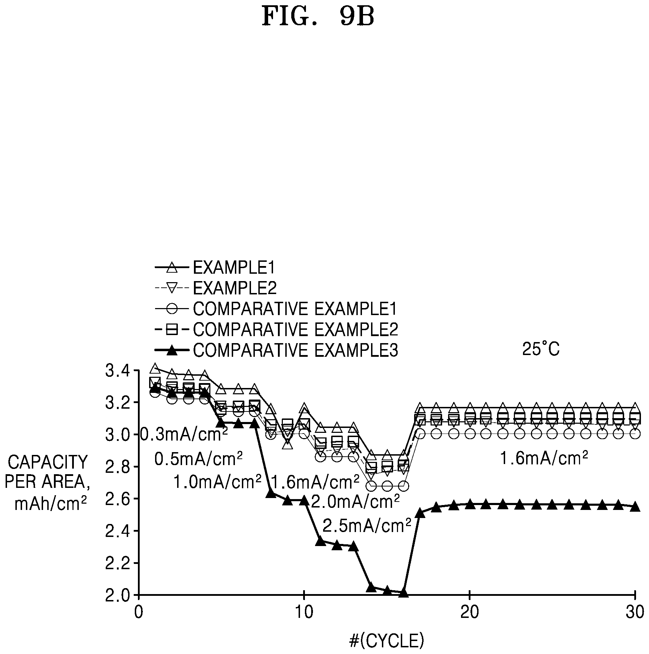

The all-solid-state secondary batteries prepared according to Example 1, Example 2, and Comparative Examples 1 to 3 were charged and discharged in the same manner as in Evaluation Example 3 in a constant temperature bath at 25 °C, but the charge and discharge test was performed for a total of 30 cycles. Results thereof are shown in FIGS. 9A and 9B.

Referring to FIGS. 9A and 9B, all solid-state secondary batteries prepared according to Example 1, Example 2, Comparative Example 1, and Comparative Example 2, excluding the all-solid-state secondary battery prepared according to Comparative Example 3, showed stable charge/discharge characteristics without short circuit. Among these, the all-solid-state secondary battery prepared according to Example 1 had the highest capacity per area and the highest capacity retention ratio up to 30 cycles.

Among these, the capacity results per area at 0.09 C-rate (0.3 mA/cm$^2$) and 0.5 C-rate (1.6 mA/cm$^2$) current densities are shown in Table 1.

Table 1

| Example | Capacity per area @ 25°C, mAh/cm$^2$ | |
| --- | --- | --- |
| | 0.09 C-rate (0.3 mA/cm$^2$) | 0.5 C-rate (1.6 mA/cm$^2$) |
| Example 1 | 3.410 | 3.163 |
| Example 2 | 3.318 | 3.068 |
| Comparative Example 1 | 3.255 | 3.004 |
| Comparative Example 2 | 3.317 | 3.064 |
| Comparative Example 3 | 3.300 | 2.590 |

Referring to Table 1, the all-solid-state secondary batteries prepared according to Example 1 and Example 2 had higher capacity per area at current densities of 0.09 C-rate (0.3 mA/cm$^2$) and 0.5 C-rate (1.6 mA/cm$^2$) than the all-solid-state secondary batteries prepared according to Comparative Examples 1 to 3.

A sub-assembly for use in an all-solid-state battery according to one aspect is configured such that an anode current collector, a middle layer, and a solid electrolyte layer are arranged in this stated order wherein in the initial state or fully discharged state thereof, the middle layer includes a first porous carbon material-containing middle layer that has pores partially or fully filled with lithium and is in contact with the solid electrolyte layer, a second porous carbon material-containing middle layer that has lithium-free pores and is positioned on the first porous carbon material-containing middle layer, and a third metal-containing middle layer that is in contact with the anode current collector on the second porous carbon material-containing middle layer. This middle layer can provide rapid lithium transport (supply/removal), resulting in improved charge/discharge characteristics, and can strengthen the mechanical structure to improve cell performance.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

**Claims**

1. A sub-assembly, comprising:

   an anode current collector;
   a middle layer; and
   a solid electrolyte layer, wherein the middle layer is between the anode current collector and the solid electrolyte layer, wherein in an initial state or a fully discharged state, the middle layer comprises

   a first porous carbon material-containing middle layer contacting the solid electrolyte layer and comprising a porous carbon material having pores partially or fully filled with lithium,
   a second porous carbon material-containing middle layer comprising lithium-free pores and disposed on the first porous carbon material-containing middle layer, and
   a third metal-containing middle layer that is in contact with the anode current collector and is on the second porous carbon material-containing middle layer, wherein the third metal-containing middle layer comprises a metal.

2. The sub-assembly of claim 1, wherein
   the first porous carbon material-containing middle layer has a pore size of 10 nanometers to 1 micrometer and a porosity of 30% to 60%.

3. The sub-assembly of claims 1 or 2, wherein
   the first porous carbon material-containing middle layer and the second porous carbon material-containing middle layer comprise a one-dimensional porous carbon material and a three-dimensional porous carbon material, respectively.

4. The sub-assembly of claim 3, wherein

   the one-dimensional porous carbon material comprises carbon nanotubes, carbon nanofibers, carbon nanowires, carbon nanorods, carbon nanoribbons, carbon nanobelts, or a combination thereof, and
   the three-dimensional porous carbon material comprises carbon black particles, graphite particles, carbon nanoflowers, carbon nanoprisms, carbon nanodiamonds, or a combination thereof.

5. The sub-assembly of claims 3 or 4, wherein

   the one-dimensional porous carbon material is an electrical conductor, and
   the three-dimensional porous carbon material is a lithium conductor.

6. The sub-assembly of any of claims 3-5, wherein

   each of the first porous carbon material-containing middle layer and the second porous carbon material-containing middle layer further comprises a two-dimensional porous carbon material;
   preferably wherein

the two-dimensional porous carbon material comprises graphene, carbon nanosheets, carbon plates, carbon platelets, MXenes, or a combination thereof.

7. The sub-assembly of any of claims 1-6, wherein
each of the first porous carbon material-containing middle layer and the second porous carbon material-containing middle layer further comprises metal nanoparticles, metal nanowires, metal nanotubes, metal nanofibers, metal nanosheets, metal nanorods, an alloy thereof, or a combination thereof.

8. The sub-assembly of any of claims 1-7, wherein

each of the first porous carbon material-containing middle layer and the second porous carbon material-containing middle layer comprises a binder, and
a content of the binder is 0.1 weight percent to 7 weight percent, based on the total weight of the first porous carbon material-containing middle layer and the second porous carbon material-containing middle layer.

9. The sub-assembly of any of claims 1-8, wherein a thickness ratio of a thickness of the second porous carbon material-containing middle layer to a thickness of the first porous carbon material-containing middle layer is 1: 0.5 to 1:5; and/or wherein the first porous carbon material-containing middle layer has a thickness of 1 micrometers to 5 micrometers.

10. The sub-assembly of any of claims 1-9, wherein
the first porous carbon material-containing middle layer is a pre-lithiation layer.

11. The sub-assembly of any of claims 1-10, wherein the third metal-containing middle layer comprises lithium, indium, gallium, an alloy thereof, or a combination thereof; and/or
wherein a surface of the solid electrolyte layer, in contact with the first porous carbon material-containing middle layer, is a treated surface.

12. The sub-assembly of any of claims 1-11, wherein
the solid electrolyte layer comprises an oxide solid electrolyte, a sulfide solid electrolyte, a polymer solid electrolyte, or a combination thereof.

13. An all-solid-state battery comprising:

a cathode including a cathode current collector and a cathode active material layer on the current collector; and
the sub-assembly of any of claims 1-12 on the cathode.

14. A method of preparing an all-solid-state battery, the method comprising:

preparing a solid electrolyte molded body;
surface treating the solid electrolyte molded body to provide a treated surface;
applying a porous carbon material-containing middle layer on one side of the solid electrolyte layer,
drying the porous carbon material-containing middle layer to prepare the solid electrolyte layer having the porous carbon material-containing middle layer on one side;
disposing the anode current collector on the porous carbon material-containing middle layer;
attaching, onto a surface of the solid electrolyte layer opposite to the surface on which the porous carbon material-containing middle layer is disposed, a first metal foil on which the first metallic lithium is disposed to obtain a first laminate comprising the anode current collector/the porous carbon material-containing middle layer/the solid electrolyte layer/the first metallic lithium/the first metal foil;
pre-lithiating the first laminate under vacuum to obtain a second laminate comprising the anode current collector/the second porous carbon material-containing middle layer with lithium-free pores/the first porous carbon material-containing middle layer with pores partially or fully filled with lithium/the solid electrolyte layer/the first metallic lithium/the first metal foil;
removing, from the second laminate, the first metal foil on which the first metallic lithium is disposed; and disposing a second metal foil between the second porous carbon material-containing middle layer and the anode current collector to form a third metal-containing middle layer, thereby preparing the sub-assembly of any of claims 1-12; and
disposing a cathode on the solid electrolyte layer of the sub-assembly to prepare the all-solid-state battery.

15. The method of claim 14, wherein the surface treatment comprises chemical treatment, electrolytic polishing, wet polishing, argon plasma etching, oxygen plasma cleaning, annealing, or exposure to high vacuum; and/or

wherein the pre-lithiation is performed at a temperature of 25 °C to 60 °C; and/or
wherein the porous carbon material-containing middle layer comprises a one-dimensional porous carbon material and a three-dimensional porous carbon material.

FIG. 1

# FIG. 2

----- BINDER
——— ONE -DIMENSIONAL POROUS CARBON MATERIAL

# FIG. 3A

ACID TREATMENT

APPLYING OF
POROUS CARBON
MATERIAL–CONTAINING
COMPOSITION

DRYING

23

# FIG. 3B

EP 4 525 072 A1

# FIG. 4

Electron Image 3

5μm

# FIG. 5A

500 X  5,000kV  50µm
510  2022-06-21

# FIG. 5B

20 µm

20 µm

40.9%

Li Concentration (Atomic %)

# FIG. 5C

C

20 μm

20 μm

7.0%

Carbon concentration (Atomic %)

# FIG. 5D

Oxygen Concentration (Atomic %)

FIG. 6

## FIG. 7A

## FIG. 7B

## FIG. 7C

## FIG. 7D

# FIG. 7E

FIG. 8A

EP 4 525 072 A1

FIG. 8B

EP 4 525 072 A1

# FIG. 8C

Legend:
- 1cy-0.3mA/cm2
- 2cy-0.5mA/cm2
- 3cy-0.5mA/cm2
- 4cy-0.5mA/cm2
- 5cy-1.0mA/cm2
- 6cy-1.0mA/cm2
- 7cy-1.0mA/cm2
- 8cy-1.6mA/cm2
- 9cy-1.6mA/cm2
- 10cy-1.6mA/cm2
- 11cy-2.0mA/cm2
- 12cy-2.0mA/cm2
- 13cy-2.0mA/cm2
- 14cy-2.5mA/cm2
- 15cy-2.5mA/cm2
- 16cy-2.5mA/cm2
- 17cy-1.6mA/cm2
- 18cy-1.6mA/cm2
- 19cy-1.6mA/cm2
- 20cy-1.6mA/cm2
- 21cy-1.6mA/cm2
- 22cy-1.6mA/cm2
- 23cy-1.6mA/cm2
- 24cy-1.6mA/cm2
- 25cy-1.6mA/cm2
- 26cy-1.6mA/cm2

VOLTAGE,V

CAPACITY PER AREA,mAh/cm²

FIG. 8D

FIG. 8E

# FIG. 9A

FIG. 9B

Europäisches
Patentamt

European
Patent Office

Office européen
des brevets

# EUROPEAN SEARCH REPORT

Application Number

EP 24 20 0202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/057285 A1 (ZHAMU ARUNA [US] ET AL) 23 February 2023 (2023-02-23) * paragraphs [0003], [0073]-[0074], [0075]-[0077], [0103], [0110], [0116], [0121]; claims 1, 5, 7, 14-16; figures 1(A), 1(B) * | 1-13 | INV. H01M4/133 H01M4/1393 H01M4/36 H01M4/587 H01M10/0525 H01M10/0562 |
| X,P | EP 4 340 053 A1 (SAMSUNG ELECTRONICS CO LTD [KR]) 20 March 2024 (2024-03-20) * paragraphs [0063]-[0064],[0066]-[0067], [0083], [0088]-[0089], [0091]; claims 8, 11; figure 2 * | 14,15 | |

----- 

-----

TECHNICAL FIELDS
SEARCHED (IPC)

H01M

The present search report has been drawn up for all claims

| Place of search | Date of completion of the search | Examiner |
|---|---|---|
| The Hague | 16 December 2024 | Scarfiello, Canio |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

........................................................................................
& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 24 20 0202

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2024

| Patent document cited in search report | Publication date | Patent family member(s) | | Publication date |
|---|---|---|---|---|
| US 2023057285 A1 | 23-02-2023 | US | 2023057285 A1 | 23-02-2023 |
| | | WO | 2023019275 A2 | 16-02-2023 |
| EP 4340053 A1 | 20-03-2024 | CN | 117712495 A | 15-03-2024 |
| | | EP | 4340053 A1 | 20-03-2024 |
| | | KR | 20240038605 A | 25-03-2024 |
| | | US | 2024105988 A1 | 28-03-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. HE** ; **L. ZHANG**. *Journal of Alloys and Compounds*, 2018, vol. 763, 228-240